# EUROPÄISCHE PATENTSCHRIFT

(11) **EP 1 812 246 B1**
(45) Veröffentlichungstag und Bekanntmachung des Hinweises auf die Patenterteilung: **05.01.2011**
(21) Anmeldenummer: 05820557.6
(22) Anmeldetag: 16.11.2005
(51) Int. Cl.: B60B 21/00, B60B 21/06, B60B 21/12

(54) **SPEICHENRADFELGE FÜR SCHLAUCHLOSREIFEN**
SPOKE WHEEL RIM FOR TUBELESS TYRES
JANTE DE ROUE A RAYONS POUR PNEU SANS CHAMBRE A AIR

(30) Priorität: 19.11.2004 DE 102004055892
(43) Veröffentlichungstag der Anmeldung: 01.08.2007
(73) Patentinhaber: KTM Sportmotorcycle AG, 5230 Mattighofen (AT)
(72) Erfinder: SCHELHAAS, Clemens, A-5241 Maria Schmolln (AT)
(74) Vertreter: Söllner, Udo
(86) Internationale Anmeldenummer: PCT/EP2005/012295
(87) Internationale Veröffentlichungsnummer: WO 2006/053736

(56) Entgegenhaltungen:
- EP-A- 0 615 865
- DE-B- 1 002 210
- DE-U1- 20 316 995
- US-A- 4 824 177

## Beschreibung

Die vorliegende Erfindung betrifft eine Felge eines Speichenrads für Schlauchlosreifen, mit einer Dichtungsvorrichtung, die im Bereich eines Felgenbettes in einer Vertiefung der Felge angeordnet ist und die Felge beidseits einer Felgenmittenebene eine Hinterschneidung mit Dichtflächen aufweist, nach dem Oberbegriff des Anspruchs 1.

Die Erfindung betrifft darüber hinaus eine Felge eines Speichenrads für Schlauchlosreifen nach dem Oberbegriff des Anspruchs 23 und eine Dichtungsvorrichtung für eine Felge eines Speichenrads mit einem Schlauchlosreifen nach dem Oberbegriff des Anspruchs 31.

Die vorstehend genannte Felge eines Speichenrads für Schlauchlosreifen mit einer Dichtungsvorrichtung und die Felge sowie die Dichtungsvorrichtung an sich sind insbesondere zur Verwendung an Motorrädern und Fahrrädern, aber auch an anderen Fahrzeugen vorgesehen, an denen Speichenräder zum Einsatz kommen. An einem solchen Speichenrad verlaufen eine Vielzahl von Speichen zwischen der Felge und einer Radnabe.

Bei der Felge handelt es sich üblicherweise um eine sogenannte gepunzte Felge, bei denen die Felge also Vertiefungen aufweist zur Aufnahme und Ausrichtung von Speichennippeln. Diese sogenannte Punze weist also eine Öffnung auf, die dafür sorgt, dass der zwischen der Felge und dem daran angeordneten Reifen gebildete Raum offen und damit nicht luftdicht ist. Aus diesem Grund wird bei einem solchen Speichenrad daher üblicherweise ein Luftschlauch eingesetzt. Dieses bekannte Speichenrad mit Luftschlauch weist aber mehrere Nachteile auf.

Zwischen dem Felgenbett und dem Luftschlauch wird üblicherweise ein Felgenband angebracht, welches die Beschädigung des Luftschlauchs an den Speichennippeln vermeiden soll, sodass sich aufgrund der Kombination aus Schlauchreifen, Schlauch, Felgenband und Felge eine hohe Masse des so gebildeten Speichenrads einstellt und sich aufgrund der von der Radnabe aus betrachtet radial außenliegenden Massenkonzentration ein hohes Rotationsträgheitsmoment des so gebildeten Speichenrads einstellt, was die Manövrierbarkeit eines beispielsweise mit einem solchen Speichenrad ausgestatteten Motorrads bei beabsichtigten Richtungsänderungen einschränkt. Darüber hinaus ist der Luftschlauch auch anfällig für Beschädigungen in der Form sogenannter "Snake-Bites", d. h. also dem Entstehen zweier Löcher im Schlauch bei Durchschlägen, beispielsweise nach einem Sprung mit einem Geländemotorrad und dem sich anschließenden Landen, bei dem der Luftschlauch gegen das Felgenbett gequetscht wird und zwei Löcher entstehen. Auch ist es bei einem solchen, mit einem Luftschlauch gebildeten Speichenrad erforderlich, sogenannte Reifenhalter an der Felge vorzusehen, die ein Verdrehen des Reifens gegenüber der Felge vermeiden sollen, da sich bei diesem Verdrehen des Reifens ansonsten oftmals das Problem einstellt, dass der sich verdrehende Reifen den Luftschlauch "mitnimmt" und somit das am Luftschlauch angebrachte Ventil, welches durch die Speichenfelge hindurchtritt, abgerissen wird.

Um nun diese Probleme zu vermeiden, sind auch bereits Schlauchlosreifen bekannt geworden, die speziell geformte Felgen notwendig machen, die mit Ausnahme einer Öffnung für das Anbringen des Ventils keine Öffnung im Felgenbett aufweisen. Damit können bei solchen Schlauchlosfelgen die Speichen auch nur einstückig mit dem Felgenbett hergestellt werden, beispielsweise als Gussfelge, die wiederum hohes Gewicht besitzen und aufgrund der Herstellung während eines Gießvorgangs auch bruchanfällig und damit nicht hoch belastbar sind.

Um nun dieses Problem zu beseitigen, hat es bereits auch Versuche gegeben, Speichenräder mit Schlauchlosreifen zu schaffen.

Die JP 09002005 A beschreibt ein Speichenrad mit Schlauchlosreifen, bei dem eine Dichtwirkung dadurch erzielt werden soll, dass oberhalb einer Dichtungsvorrichtung ein Schutzstreifen angebracht wird, an dem der montierte Reifen mit seinem Reifenwulst aufliegt, sodass die Dichtungswirkung dadurch erzielt werden soll, dass der Reifenwulst an dem Schutzstreifen aufliegt. Wird nun ein so gebildetes Speichenrad beispielsweise an Geländesportsmotorrädern eingesetzt, so können kleine Steine oder dergleichen in den Bereich der Dichtfläche zwischen dem Reifenwulst und dem Schutzstreifen gelangen und somit für Undichtigkeit sorgen. Die Montage und Demontage eines Reifens an dem so ausgebildeten Rad wird durch das Verrutschen des Schutzstreifens erschwert.

Anhand der DE AS 1002210 ist eine Einlage für Schlauchlosreifen bekannt geworden, bei der Steine oder ähnliches zwischen die Einlage und dem Schlauchlosreifenwulst gelangen können und somit die Dichtheit wiederum nicht mehr gegeben ist, wenn ein damit gebildetes Speichenrad an einem Motorrad oder einem Fahrrad eingesetzt wird, welches im nicht befestigten Gelände bewegt wird. Auch hier wird die Montage und Demontage eines Reifens an dem so ausgebildeten Rad durch das Verrutschen der Einlage erschwert.

Anhand der EP 0 615 865 A1 ist eine Dichtvorrichtung für Speichenräder bekannt geworden, bei der die Dichtwirkung wiederum durch den flächigen Kontakt zwischen dem Reifenwulst und der Dichtvorrichtung erzielt werden soll. Darüber hinaus macht diese Vorrichtung auch einen speziellen Reifen erforderlich mit einem übergroßen Reifenwulst, sodass keine dieses Merkmal nicht aufweisenden Reifen eingesetzt werden können.

Anhand der US 4,824,177 ist ein Speichenrad mit einem Schlauchlosreifen bekannt geworden, bei dem sich eine Dichtungsvorrichtung im Bereich eines Felgenbettes in einer Vertiefung der Felge angeordnet befindet. Diese als Dichtring ausgebildete Dichtungsvorrichtung hat keine definierte Dichtfläche und besitzt nur eine geringe Anpresskraft an dem Felgenband, was dazu führt, dass der Dichtring aus dem Felgenband herauswandert, wenn ein mit einem solchen Speichenrad ausgestattetes Motorrad mit hoher Geschwindigkeit und sich daraus ergebender hoher Drehwinkelgeschwindigkeit des Rades bewegt wird, sodass der Dichtring das Felgenbett verlässt und das Rad Luft verliert.

Es sind darüber hinaus auch Speichenräder mit Schlauchlosreifen bekannt geworden, die versuchen, ohne eine Dichtungsvorrichtung im Bereich des Felgenbettes auszukommen.

Eine solche Lösung ist beispielsweise anhand der EP 0 962 338 A1 bekannt geworden, die einerseits geringe Offroad-Tauglichkeit besitzt durch hohe Belastungen im Bereich zwischen Speichennippel und Speiche und aufgrund einer hohen Zahl von kreuzweise verlaufenden Speichen wiederum das Problem eines hohen Rotationsträgheitsmoments mit sich bringen.

Anhand der JP 61054302 A ist eine Speichenfelge für einen Schlauchlosreifen bekannt geworden. Diese weist ein Felgenband auf mit einem undurchlässigen dünnwandigen Abschnitt, der in engem Kontakt zu einer Seitenwand und einer Ausnehmung an einer Innenumfangsfiläche der Felge verläuft. Die Seitenwand und die innere Umfangsfläche der Felge sind dabei so ausgebildet, dass sie das Felgenband aufnehmen können. Bei dem Felgenband handelt es sich um H-förmiges ringförmiges Felgenband, welches in eine Nut der Felge eingepasst wird und einstückige dünnwandige Abschnitte besitzt, die sich in engem Kontakt mit den beiden Seitenwänden der Nut befinden. Von den beiden Seitenwänden der Ausnehmung erstrecken sich im Winkel zu einer Längsmittenebene der Felge verlaufende Vertiefungen, in die am Felgenband die beiden Schenkel der H-förmigen Felgenbands eingreifen, sodass die Felge im Bereich dieser Vertiefungen beidseits der Felgenmittenebene bezogen auf eine zur Felgenmittenebene parallele Ebene eine Hinterschneidung besitzt, das Felgenband aber im von den Vertiefungen ausgehend radial außenliegenden Bereich an den Seitenwänden der Felge nur mehr vom Reifenfülldruck gegen die Seitenwand gedrückt wird, nämlich von der Felgenmittenebene aus in Richtung zur jeweiligen Seite hin, sodass es bei einem Absenken des Innendrucks zwischen dem Schlauchlosreifen und der Felge zu einem Entweichen der Luft zwischen den beiden Schenkeln des H-förmigen Felgenbands und den Seitenwänden der Felge kommen kann.

Wenn nun an dem so ausgebildeten Rad ein Reifen montiert werden soll, so kommt dieser bei der Montage unweigerlich mit dem Felgenband in Kontakt. Dieser Kontakt des Felgenbands mit dem Reifen führt zu einem Verrutschen des Felgenbands an der Felge, so dass bereits vor dem Befüllen des Rads undichte Stellen zwischen Felgenband und Felge vorliegen. Das Felgenband muss neu ausgerichtet werden und selbst diese Vorgehensweise stellt nicht sicher, dass die Undichtigkeiten beseitigt werden, so dass in der Praxis so vorgegangen wird, dass das Felgenband mit der Felge verklebt wird. Wird der montierte Reifen demontiert, so wiederholt sich das Undichtwerden zwischen Felgenband und Felge, da der Reifen bei der Demontage wieder mit dem Felgenband in Kontakt kommt und es trotz der Klebung verschiebt. Wenn dann ein neuer Reifen aufgezogen wird, kann auch mit einem erneuten Verkleben des Felgenbands an der Felge ein Undichtwerden nicht mehr beseitigt werden.

Anhand der EP 06 16 911 A2 ist eine Anordnung bekannt geworden zum Befüllen von Schlauchlosrädern. Diese besitzt ein luftdichtes Band, welches in eine Ausnehmung der Felge eingebracht werden kann und ein mit dem Felgenband einstückig ausgebildetes Ventil, welches in eine Ventilöffnung der Felge eingesetzt werden kann und dort mit einer Mutter oder dem Reifenfülldruck fixiert wird. Wenn nun an dem so ausgebildeten Rad ein Reifen montiert werden soll, so kommt dieser bei der Montage unweigerlich mit dem Felgenband in Kontakt. Dieser Kontakt des Felgenbands mit dem Reifen führt zu einem Verrutschen des Felgenbands an der Felge, so dass bereits vor dem Befüllen des Rads undichte Stellen zwischen Felgenband und Felge vorliegen, so dass auch hier in der Praxis versucht wird, das Verrutschen des Felgenbands durch Verkleben mit der Felge zu vermeiden. Bei der Demontage des Reifens und Montage eines neuen Reifens wiederholen sich diese Probleme. Anhand der US 33 35 778 ist eine Felge zur Aufnahme eines Schlauchlosreifens bekannt geworden, wobei die Felge ein Felgenband besitzt, welches mit seitlichen Bereichen an inneren Seitenflächen von mittels eines Rollvorgangs gefertigten Felgenflanschflächen anliegt oder sich seitlich bis in den Bereich unterhalb von Endabschnitten der Felgenflanschflächen erstreckt und dort von diesen Endabschnitten gehalten wird. Wenn nun an dem so ausgebildeten Rad ein Reifen montiert werden soll, so kommt dieser bei der Montage unweigerlich mit dem Felgenband in Kontakt. Dieser Kontakt des Felgenbands mit dem Reifen führt zu einem Verrutschen des Felgenbands an der Felge, so dass bereits vor dem Befüllen des Rads undichte Stellen zwischen Felgenband und Felge vorliegen

Anhand der DE 203 16 995 U1 ist eine Fahrradfelge zur Aufnahme eines Schlauchlosenreifens bekannt geworden, wobei es sich hier um eine aus einem Felgenband und einer Felge gebildete Anordnung handelt und das Felgenband aus einem luftdichten Werkstoff, beispielsweise Kautschuk, in eine Ausnehmung der Felge eingebracht werden kann, sodass Lippen des Felgenbands von Fanghaken der Felge festgehalten werden.

Anhand der DE 38 78 397 T2 ist eine Felge mit Wulsteinlage zum Fahren im drucklosen Zustand eines Reifens bekannt geworden. Eine solche Felge soll Notlaufeigenschaften besitzen derart, dass bei einem plötzlichen Druckverlust im Reifen die ringförmige Wulsteinlage aus Zellkautschuk dafür geeignet ist, die Last im Luftreifen aufzunehmen. Die Wulsteinlage wird in einem auf die Drehachse des Reifens bezogenen radial innenliegenden Bereich in einer Vertiefung des Felgenbetts angeordnet und zwar derart, dass die Vertiefung begrenzende Einziehungen beidseits der Felgenmittenebene die Wulsteinlage festhalten.

Schließlich ist anhand der DE 298 03 256 U1 eine Sicherheitsfelge für Fahrräder und ähnliche Fahrzeuge bekannt geworden, bei denen die Felgenflanken mit einer Hohlkammer ausgestattet sind, die innen Verschleißmarken besitzen.

Ausgehend hiervon liegt der vorliegenden Erfindung nunmehr die Aufgabe zugrunde, eine Felge eines Speichenrads für Schlauchlosreifen mit einer Dichtungsvorrichtung zu schaffen, die den Verzicht auf die Verwendung eines Luftschlauches ermöglicht und den Einsatz nicht speziell an die Felgenform angepasster handelsüblicher Schlauchlosreifen ermöglicht. Darüber hinaus soll mit der Felge mit Dichtungsvorrichtung ein leichtes Speichenrad mit einem Schlauchlosreifen ermöglicht werden, das volle Offroad-Tauglichkeit mit hoher Manövrierbarkeit verbindet und das Austreten von Luft aus dem so gebildeten Rad auch bei niedrigen Innendrücken und hohen Rotationsdrehwinkelgeschwindigkeiten des Speichenrades vermeidet. Darüber hinaus soll die Felge eine einfache Montierbarkeit der Dichtungsvorrichtung und eine einfache Montage sowie Demontage des Reifens ermöglichen und dafür sorgen, dass sich die Dichtungsvorrichtung bei der Montage und Demontage eines Reifens an der Felge nicht verschiebt. Zudem soll mit der Erfindung eine zur Bildung eines solchen Speichenrades mit Schlauchlosreifen geeignete Felge und eine Dichtungsvorrichtung dafür geschaffen werden.

Die Erfindung weist zur Lösung dieser Aufgabe hinsichtlich der Felge eines Speichenrads für Schlauchlosreifen und einer Dichtungsvorrichtung die Merkmale des Anspruchs 1 auf. Vorteilhafte Ausgestaltungen hiervon sind in den weiteren Ansprüchen beschrieben.

Darüber hinaus weist die Erfindung zur Lösung der genannten Aufgabe hinsichtlich der Felge die Merkmale des Anspruchs 23 auf, wobei vorteilhafte Ausgestaltungen hiervon in den weiteren Ansprüchen beschrieben sind. Zudem weist die Erfindung zur Lösung der genannten Aufgabe hinsichtlich der Dichtungsvorrichtung die Merkmale des Anspruchs 31 auf und vorteilhafte Ausgestaltungen hiervon sind in den sich daran anschließenden Ansprüchen beschrieben.

Die Erfindung schafft nunmehr eine Felge eines Speichenrads für Schlauchlosreifen mit einer Dichtungsvorrichtung, die im Bereich eines Felgenbettes in einer Vertiefung der Felge angeordnet ist und die Felge beidseits einer Felgenmittenebene eine Hinterschneidung mit Dichtflächen aufweist, wobei die Hinterschneidung mit zwei Einschnürungen versehen ist, die Dichtflächen ausbilden und die Dichtungsvorrichtung zur Hinterschneidung weitgehend form- und flächenkomplementär ausgebildet ist und in dieser angeordnet ist.

Mit der die Dichtungsvorrichtung aufweisenden Felge wird aufgrund der Hinterschneidung erreicht, dass die Dichtungsvorrichtung bei der Montage einfach und leicht in die Hinterschneidung eingesetzt werden kann. Die so geschaffene Konfiguration lässt die Verwendung üblicher Schlauchlosreifen zu, ohne dass diese Reifen speziell zur Verwendung mit der erfindungsgemäßen Felge konfiguriert werden müssten. Bei auf die Felge aufgezogenen Schlauchlosreifen steht die Dichtungsvorrichtung nicht mit dem Reifenwulst in direkter Verbindung, sodass eine etwaige Relativbewegung zwischen der Felge und dem Reifen nicht zu einem Entweichen von Innendruck aus dem Reifen führt. Selbst dann, wenn der Reifen mit nur niedrigem Innendruck gefahren wird, um beispielsweise eine hohe Aufstandsfläche des Reifens auf losem Untergrund zur Verbesserung der Traktion herbeizuführen, führt ein Durchschlagen des Reifens nach beispielsweise einem Sprung mit einem mit der erfindungsgemäßen Felge und daran montiertem Schlauchlosreifen ausgestattetem Fahrrad oder Motorrad nicht zu Undichtigkeiten am Reifen, da kein leicht beschädigbarer Luftschlauch vorhanden ist.

Die Dichtungsvorrichtung fügt sich aufgrund ihrer zur Hinterschneidung der Felge form- und flächenkomplementären Ausbildung gleichsam nahtlos in die Hinterschneidung ein, sodass die Dichtungsvorrichtung zu einem Bestandteil des Felgenbettes wird und sich die für die Reifenmontage erforderliche Felgenkontur ergibt.

Die Dichtflächen im Bereich der Hinterschneidung können so angebracht werden, dass sie in überwiegend radialer Richtung wirken. Die Hinterschneidung und die Dichtungsvorrichtung können so ausgebildet sein, dass die Flächenpressung zwischen der Dichtungsvorrichtung und den Dichtflächen der Felge im Bereich radial außenliegender Dichtflächen mit steigender Drehwinkelgeschwindigkeit der Felge zunimmt. Damit wird auch bei einem mit niedrigem Innendruck betriebenen Reifen erreicht, dass ein Entweichen von Luft aus dem Reifen selbst bei hohen Fahrgeschwindigkeiten des damit ausgestatteten Motorrads oder Fahrrads vermieden werden kann.

Es sind dabei an der Felge beidseits der Felgenmittenebene zwei die Hinterschneidung einschnürende Bereiche ausgebildet, die Dichtflächen ausbilden. Aufgrund der form- und flächenkomplementär zur Hinterschneidung ausgebildeten Konfiguration der Dichtungsvorrichtung kann sich dann im Bereich der Einschnürung eine lokal hohe Flächenpressung einstellen, die auch dann gegeben ist, wenn beispielsweise der Schlauchlosreifen eine Relativbewegung auf der Felge ausführt. Damit wird selbst dann, wenn aufgrund ungünstiger und eine hohe Belastung auf den auf der Felge angebrachten Schlauchlosreifen herrschenden Betriebsbedingungen sichergestellt, dass kein Innendruck aus dem Reifen entweicht und somit beispielsweise auch unter Wettbewerbsbedingungen bei Geländesportfahrten ein Absenken des Reifeninnendrucks selbst bei beabsichtigt herbeigeführtem sehr geringem Innendruck und hohen Drehwinkelgeschwindigkeiten der Felge vermieden wird.

Es ist vorgesehen, dass an der beidseits der Felgenmittenebene ausgebildeten Hinterschneidung sowohl im radial inneren als auch im radial äußeren Bereich der Hinterschneidung Dichtflächen angeordnet sind, die mittels einer im Bereich der jeweiligen Hinterschneidung ausgebildeten Einschnürung ausgebildet werden, sodass sich an jeder Hinterschneidung einander weitgehend radial gegenüberliegende Dichtflächen einstellen. Wird nun durch diese Dichtflächen eine Ebene hindurchgelegt, so kann nach der Erfindung diese Ebene mit der Felgenmittenebene einen Winkel von etwa 0 Grad bis etwa 120 Grad einschließen. Es bedeutet dies mit anderen Worten, dass die von den Dichtflächen aufgespannte Ebene parallel zur Felgenmittenebene verlaufen kann - dann liegt ein Winkel von 0 Grad vor - oder einen Winkel von bis zu etwa 120 Grad mit dieser Felgenmittenebene einschließen kann. Auch kann die Dichtflächenebene einen Winkel von bis zu -20 Grad mit der Felgenmittenebene einschließen. Damit wird eine hohe konstruktive Freiheit hinsichtlich der Ausbildung der Felge erreicht, also eine hohe konstruktive Freiheit bezüglich der Ausbildung des Felgenbettes und des Übergangsbereichs vom Felgenbett zum Felgenhorn und dazwischenliegender Bereiche, wie beispielsweise eines Hump, besteht. Es ist nach der Erfindung vorgesehen, dass die Hinterschneidung derart ausgebildet ist, dass sie die Dichtungsvorrichtung in von der Felgenmittenebene abgewandten Bereichen weitgehend vollständig umschließt. Damit wird erreicht, dass die Dichtungsvorrichtung von der Hinterschneidung so umfasst und insbesondere übergriffen wird, dass auch bei hohen Drehwinkelgeschwindigkeiten des Rades und niedrigen Innendrücken ein Herausrutschen der Dichtungsvorrichtung aus dem Bereich der Hinterschneidung vermieden ist und somit kein unbeabsichtigter Verlust des Innendrucks des Reifens entstehen kann.

Die Dichtungsvorrichtung kann dabei so ausgebildet sein, dass sie den Bereich des Felgenbettes zwischen den beidseits der Felgenmittenebene vorgesehenen Hinterschneidungen überspannt und sich somit form- und flächenkomplementär in die beidseits der Felgenmittenebene vorgesehenen Hinterschneidungen hineinschmiegt und das Felgenbett vollständig überspannt.

Die Dichtungsvorrichtung kann nach der Erfindung so ausgebildet sein, dass sie in von der Felge demontiertem Zustand ein gegenüber der Felge leicht geändertes Profil aufweist und sich bei der Anordnung der Dichtungsvorrichtung an der Felge zumindest im Bereich der Dichtflächen und der Dichtungsvorrichtung eine vorbestimmte Flächenpressung einstellt, sodass - nach Anbringung des Reifens an der Felge mit Dichtungsvorrichtung - ohne dass über ein Luftventil der Reifen bereits mit Innendruck versorgt wurde, Dichtigkeit im Bereich der Dichtflächen gegeben ist, also auch bei einem noch völlig luftleeren Reifen Dichtigkeit im Bereich der Dichtflächen gegeben ist. Damit wird erreicht, dass schon beim Beginn des Aufpumpens des Rades respektive des Reifens kein Innendruck entweichen kann.

Es kann dabei nach der Erfindung die Dichtungsvorrichtung so ausgebildet sein, dass sie in dem der Hinterschneidung zugeordneten Bereich im Querschnitt eine einem Parallelogramm ähnliche Konfiguration besitzt mit im Bereich von Einschnürungen der Hinterschneidung vorgesehenen Einbuchtungen. Die Konfiguration der Dichtungsvorrichtung relativ zu der Hinterschneidung kann dabei so gewählt werden, dass sich bei der Montage der Dichtungsvorrichtung an der Felge eine Formänderung der Dichtungsvorrichtung relativ zur Konfiguration des Felgenbettes und den Hinterschneidungen ergibt derart, dass sich eine vorbestimmte Flächenpressung zwischen der Dichtungsvorrichtung und der Hinterschneidung im gesamten Bereich der Hinterschneidung ergibt, zumindest aber im Bereich der Dichtflächen zwischen der Dichtungsvorrichtung und den Dichtflächen an der Hinterschneidung.

Zu diesem Zweck kann die Dichtungsvorrichtung im unmontierten Zustand an dem der Hinterschneidung zuzuordnenden Bereich in radialer Richtung der Felge betrachtet eine größere Höhe besitzen als die zugehörige Höhe der Hinterschneidung. Wird nun die Dichtungsvorrichtung in den Bereich der Hinterschneidung gebracht, so stellt sich dadurch eine zumindest im Bereich der Dichtflächen lokal wirkende hohe Flächenpressung ein, die dazu führt, dass nach der Montage des Reifens an der Felge mit Dichtungsvorrichtung unter keinen Betriebsbedingungen eine Undichtigkeit entstehen kann.

Es ist außerdem vorgesehen, dass die Dichtungsvorrichtung im unmontierten Zustand in radialer Richtung der Felge einen kleineren Durchmesser besitzt als die Felge, sodass die Dichtungsvorrichtung bei der Montage an der Felge gedehnt wird. Dadurch, dass die Querschnittsbreite der Dichtungsvorrichtung im unmontierten Zustand in dem der Einschnürung zuzuordnenden Bereich der Hinterschneidung größer ist als die Querschnittsbreite der Einschnürung der Hinterschneidung, führt die vorstehend genannte Durchmesservergrößerung der Dichtungsvorrichtung bei der Montage an der Felge nicht dazu, dass der den Hinterschneidungen zuzuordnende Bereich der Dichtungsvorrichtung aus den Hinterschneidungen herausgezogen wird.

Nach einer Weiterbildung der Erfindung kann die Dichtungsvorrichtung in dem der Einschnürung der Hinterschneidung zuzuordnenden Bereich mit mindestens einer in Umfangsrichtung umlaufenden Dichtlippe versehen sein, sodass sich im Bereich der Einschnürung eine nochmals lokal höhere Flächenpressung zwischen der Dichtungsvorrichtung und der Hinterschneidung der Felge einstellt.

Um die Montierbarkeit der Dichtungsvorrichtung an der Felge zu erleichtern, d. h. das Einbringen der Dichtungsvorrichtung in den Bereich beidseits der Felgenmittenebene vorgesehenen Hinterschneidungen, kann die Dichtungsvorrichtung mit mindestens einer weitgehend quer zur Felgenmittenebene verlaufenden Einschnürung versehen sein, sodass der Bereich der Dichtungsvorrichtung, der bei der Montage der Dichtungsvorrichtung an der Felge als erstes in die Hinterschneidungen eingebracht wird, lokal und kurzzeitig gestaucht wird, damit die Dichtungsvorrichtung einfach in die Hinterschneidungen eingebracht werden kann.

Darüber hinaus ist es nach der Erfindung vorgesehen, dass die Felge im Verbindungsbereich zwischen dem Felgenbett und dem Felgenhorn mit einer weitgehend stetig verlaufenden Außenkontur versehen ist, sodass sich die Felge problemlos und einfach reinigen lässt. Zudem kann die Felge im Verbindungsbereich zwischen dem Felgenbett und dem Felgenhorn als Hohlkammerprofil ausgebildet sein, sodass sich durch die stetige, insbesondere geradlinige Ausbildung der Außenkontur in diesem Bereich keine das Rotationsträgheitsmoment der Felge steigernde ungünstige Massenverteilung einstellt.

Das Felgenbett kann nach der vorliegenden Erfindung im Verbindungsbereich zwischen den beidseits der Felgenmittenebene vorgesehenen Hinterschneidungen einen Durchmesser besitzen, der kleiner ist als der Durchmesser der unteren Endbereiche der unteren Einschnürungen. Es bedeutet dies mit anderen Worten, dass die Felge im Bereich des Felgenbettes, an dem die Dichtungsvorrichtung zwischen den beiden Hinterschneidungen zur Anlage kommt, einen kleineren Durchmesser aufweist als im Bereich der beiden Einschnürungen, sodass eine Dichtungsvorrichtung montiert werden kann, die im Bereich ihrer beiden seitlichen Flügel, die zur Aufnahme in den beiden Hinterschneidungen dienen, im unteren Bereich der Flügel einen größeren Durchmesser besitzt als der Bereich der Dichtungsvorrichtung zwischen den beiden Flügeln, die der Anordnung im Felgenbett dienen.

Die Dichtungsvorrichtung kann zumindest in einem Teilbereich, der das Felgenbett überspannt, auch mit mindestens zwei Lagen ausgebildet sein, die jeweils gleiche Dicke aufweisen oder auch unterschiedliche Dicken besitzen können. Die näher am Felgenbett liegende untere Lage hat dann die Funktion, die beispielsweise im Abstand zur unteren Lage verlaufende obere Lage vor dem Eindringen eines Speichennippels oder über den Speichennippel überstehender Speichenenden zu schützen. Eine solche Ausbildung kann gegenüber einer einteiligen dicken Lage den Vorteil besitzen, dass sich eine Beschädigung der Dichtungsvorrichtung durch scharfkantige Nippel oder überstehende Speichenenden nicht als Riss bis in die obere Lage fortsetzen kann. Darüber hinaus besitzt die Ausbildung der Dichtungsvorrichtung mit beispielsweise zwei solcher Lagen den Vorteil, zu einer besseren Montierbarkeit der Dichtungsvorrichtung an der Felge zu führen, da zwei beispielsweise mit Zwischenraum zu einander verlaufende Lagen der Dichtungsvorrichtung bei der Montage einfacher in Breitenrichtung zusammengedrückt werden können als eine Dichtungsvorrichtung mit nur einer dickeren Lage an dem Bereich, an dem die Dichtungsvorrichtung am Felgenbett aufliegt.

Zwischen den einzelnen Lagen der Dichtungsvorrichtung kann ein Zwischenraum vorgesehen sein, der bei der Herstellung der Dichtungsvorrichtung dafür sorgt, dass die einzelnen Lagen nicht aneinander haften, sodass die Vorteile der mehrlagigen Ausbildung der Dichtungsvorrichtung erhalten bleiben.

Auch kann zwischen den einzelnen Lagen der Dichtungsvorrichtung mindestens ein einstückig mit den Lagen ausgebildeter Steg vorgesehen sein, der die Lagen unter Beibehaltung des vorstehend genannten Zwischenraums an einem Teilbereich verbindet. Eine solche Ausbildung sorgt dafür, dass der Zwischenraum zwischen beispielsweise zwei Lagen der Dichtungsvorrichtung erhalten bleibt und ein großflächiges Zusammenkleben der oberen und unteren Lagen beim Herstellungsvorgang der Dichtungsvorrichtung vermieden werden kann und somit die Vorteile der mindestens zweilagigen Dichtungsvorrichtung erhalten bleiben. Auch kann sich über diesen Steg ein etwa an der unteren Lage durch einen Speichennippel oder ein scharfkantiges überstehendes Speichenende auftretender Riss nicht bis in den Bereich der zweiten Lage fortsetzen, sodass ein Entweichen von Luft aus dem Reifeninnenraum vermieden wird.

Nach einer Weiterbildung der Erfindung kann an der Dichtungsvorrichtung an mindestens einer Lage mindestens ein damit einstückig ausgebildeter und sich in Richtung zur anderen Lage erstreckender Ansatz vorgesehen sein, der also mit nur einer Lage verbunden ist und sich bis zur anderen Lage erstrecken kann oder im Abstand zu dieser verbleibt. Eine solche Ausbildung führt nun zu dem Vorteil, dass es beim Aufeinanderliegen der beiden Lagen der Dichtungsvorrichtung nur zu einem linienförmigen Kontakt kommt und darüber hinaus der Ansatz auch großflächiges Zusammenkleben der oberen und unteren Lage der Dichtungsvorrichtung beim Herstellungsverfahren vermeiden kann und somit die Vorteile der mindestens zweilagigen Lösung erhalten bleiben. Auch kann ein sich an der unteren Lage etwa einstellender Riss aufgrund eines Speichennippels oder eines scharfkantigen Speichenendes über den Ansatz nicht in Richtung zur zweiten Lage fortsetzen.

Nach einer Weiterbildung kann in dem Zwischenraum zwischen den mindestens zwei Lagen der Dichtungsvorrichtung auch eine Einlage vorgesehen sein, die sich dort lose befindet oder mit mindestens einer der Lagen eine Verbindung besitzt und somit einen zusätzlichen Schutz gegen eine Beschädigung der Dichtungsvorrichtung bis in den Luftraum des Reifens aufgrund eines Speichennippels oder eines scharfkantigen Speichenendes schafft.

Auch ist es nach der Erfindung vorgesehen, dass die Dichtungsvorrichtung im unmontierten Zustand in dem Bereich der Felgenmittenebene, also dort, wo die Dichtungsvorrichtung an dem Felgenbett zur Anlage kommt, eine von einer geradlinigen Erstreckung abweichende Kontur besitzt und insbesondere bogenförmig ausgebildet ist. Damit wird erreicht, dass sich mindestens eine Lage der Dichtungsvorrichtung aus einer geradlinigen Erstreckung heraus erhebt und die so beispielsweise bogenförmige Ausgestaltung die Montage der Dichtungsvorrichtung an der Felge erleichtert, da die Breite der Dichtungsvorrichtung durch ein Zusammendrücken einfach verringert werden kann und sich so die Dichtungsvorrichtung problemlos in ihren vorgesehenen Sitz an der Felge hineinschmiegt.

Wie es vorstehend bereits erwähnt wurde, kann die Dichtungsvorrichtung im Bereich ihrer beiden seitlichen Flügel im unteren Endbereich der Flügel in radialer Richtung von einer Rotationsachse der Felge aus betrachtet einen größeren Durchmesser aufweisen als an dem Bereich, an dem die Dichtungsvorrichtung das Felgenbett überspannt, da auf diese Weise die Dichtungsvorrichtung bei der Montage an der Felge seitlich nicht verkanten kann und gleichsam von selbst in ihrer endgültige Position rutscht. Auch führt dieser sich aus der Durchmesserdifferenz ergebende Abstand dazu, dass die zusätzliche Bauhöhe der Dichtungsvorrichtung aufgrund der mindestens zweilagigen Ausgestaltung im mittleren Bereich zwischen den beiden Flügeln kompensiert wird und somit eine etwaig vorgeschriebene Felgenbettkontur beibehalten werden kann.

Schließlich ist es nach der Erfindung auch vorgesehen, dass die Dichtungsvorrichtung mit einem einvulkanisierten Ventil zur Befüllung des an der Felge angebrachten Schlauchlosreifens versehen ist. Da die an der Felge angebrachte Dichtungsvorrichtung von einem sich etwaig an der Felge geringfügig relativ zu dieser verdrehenden Reifen nicht beeinflusst wird, da kein körperlicher Kontakt zwischen dem Schlauchlosreifen und der Dichtungsvorrichtung besteht, ist ein Abreißen des Ventils, wie es bei mit Luftschlauch ausgestatteten Speichenfelgen möglich ist, ausgeschlossen. Damit ermöglicht die erfindungsgemäße Felge mit Dichtungsvorrichtung den Verzicht auf einen Luftschlauch und gestattet die Montage schlauchloser Reifen. Zudem wird durch die erfindungsgemäße Felge mit Dichtungsvorrichtung auch bei hohen Belastungen - beispielsweise aufgrund von Geländesportwettbewerben - ein Entweichen von Luft selbst bei niedrigen Innendrücken und hohen Geschwindigkeiten des damit ausgestatteten Fahrzeugs vermieden. Das Risiko des Abreißens des Ventils bei Reifen mit Luftschläuchen entfällt. Das luftschlauchbedingte Risiko einer Reifenpanne entfällt vollständig. Zudem kann mit der erfindungsgemäßen Felge mit Dichtungsvorrichtung die Manövrierbarkeit eines damit ausgestatteten Fahrzeug aufgrund der verglichen mit mittels eines Gießvorgangs hergestellten Felgen oder mit Luftschläuchen arbeitenden Speichenfelgen verringerten Rotationsträgheitsmoments des Reifens deutlich verbessert werden. Die Hinterschneidung der Felge und die Dichtungsvorrichtung sind so ausgebildet, dass die lokal zwischen den Dichtflächen und der Dichtungsvorrichtung herrschenden Flächenpressungen mit zunehmender Drehwinkelgeschwindigkeit der Speichenfelge mit Schlauchlosreifen nach der Erfindung zunimmt.

Die Erfindung schafft nun auch eine Felge eines Speichenrads für Schlauchlosreifen, wobei die Felge beidseits einer Felgenmittenebene eine Hinterschneidung mit Dichtflächen aufweist und die Felge für eine Dichtungsvorrichtung vorgesehen ist, die zur Anordnung im Bereich eines Felgenbettes in einer Vertiefung der Felge vorgesehen ist und die Hinterschneidung mit zwei Einschnürungen versehen ist, die die Dichtflächen ausbilden. Die Dichtungsvorrichtung kann in das Felgenbett der Felge so eingelegt werden, dass die an den Hinterschneidungen vorgesehenen Einschnürungen mit der Dichtungsvorrichtung unter einer solchen Vorspannung in Kontakt treten, dass der Luftraum des Schlauchlosreifens hermetisch abgedichtet ist.

Eine in einer Felgenquerschnittsansicht von den Dichtflächen aufgespannte Ebene verläuft dabei in einem Winkel zur Felgenmittenebene von etwa 0 Grad bis etwa 120 Grad. Dabei kann beidseits der Felgenmittenebene im Bereich der Hinterschneidung radial außenliegend eine Dichtfläche ausgebildet werden und eine radial weiter innenliegende Dichtfläche, sodass durch die so konfigurierte Hinterschneidung die zur Anordnung im Bereich der Hinterschneidung vorgesehene Dichtungsvorrichtung in dem von der Felgenmittenebene abgewandten Bereich weitgehend vollständig umschlossen wird. Durch diese Konfiguration wird erreicht, dass sich bei zunehmender Drehwinkelgeschwindigkeit der Felge die an der Felge anzubringende Dichtungsvorrichtung mit steigender Anpresskraft in die Hinterschneidung drückt und somit die im Dichtflächenbereich zwischen den Dichtflächen der Felge und der Dichtungsvorrichtung herrschende Anpresskraft mit steigender Drehwinkelgeschwindigkeit der Felge zunimmt.

Die Felge kann dabei so ausgebildet sein, dass sie im Verbindungsbereich zwischen dem Felgenbett und dem Felgenhorn eine weitgehend stetige, insbesondere geradlinig verlaufende Außenkontur besitzt und zur Verringerung der Drehmassen in diesem Bereich als Hohlkammerprofil ausgebildet ist.

Die Erfindung schafft auch eine Dichtungsvorrichtung für eine Felge eines Speichenrads mit einem Schlauchlosreifen, wobei die Dichtungsvorrichtung zur Anordnung im Bereich eines Felgenbettes in einer Vertiefung der Felge vorgesehen ist und die Felge Dichtflächen im Bereich beidseits einer Felgenmittenebene in einer Hinterschneidung aufweist und die Dichtungsvorrichtung zu der Hinterschneidung der Felge weitgehend form- und flächenkomplementär ausgebildet ist derart, dass die Dichtungsvorrichtung in einem in die Hinterschneidung einzubringenden Bereich zwei Einbuchtungen aufweist, die zur Anordnung an Einschnürungen der Hinterschneidung vorgesehen sind.

Ganz allgemein ist die Dichtungsvorrichtung so konfiguriert, dass sich bei ihrer Anordnung im Bereich der Hinterschneidung der Felge bereits bei still stehender Felge und ohne Kraftbeaufschlagung durch einen Reifeninnendruck eine Dichtwirkung zwischen der Dichtungsvorrichtung und den Dichtflächen der Hinterschneidung einstellt. Wird nun das mit einem Schlauchlosreifen versehene und mit der Dichtungsvorrichtung versehene Rad in Drehung versetzt, so steigt mit zunehmender Drehwinkelgeschwindigkeit die Flächenpressung zwischen der Dichtungsvorrichtung und Dichtflächen der Felge im Bereich radial außenliegender Dichtfläche an.

Die Dichtungsvorrichtung ist so konfiguriert, dass sie den Bereich des Felgenbettes zwischen den beidseits der Felgenmittenebene vorgesehenen Hinterschneidungen der Felge überspannen kann. Zu diesem Zweck kann sie in dem der Hinterschneidung zugewandten Bereich eine im Querschnitt einem Parallelogramm ähnliche Konfiguration besitzen mit im Bereich von Einschnürrungen der Hinterschneidung der Felge vorgesehenen Einbuchtungen.

Zur Erleichterung der Montage der Dichtungsvorrichtung in dem Bereich der Hinterschneidung der Felge kann die Dichtungsvorrichtung eine Einschnürung aufweisen, die bei der Einbringung der Dichtungsvorrichtung in den Bereich der Hinterschneidung der Felge elastisch nachgibt und somit die Aufnahme der Dichtungsvorrichtung in die Hinterschneidung der Felge erleichtert.

Die Erfindung wird im Folgenden anhand der Zeichnung näher erläutert. Diese zeigt in:
Fig. 1 eine teilweise geschnittene Darstellung einer Ausführungsform einer Felge mit Dichtungsvorrichtung nach der Erfindung und daran angeordnetem Schlauchlosreifen;
Fig. 2a einen Ausschnitt einer Felge im Bereich der Hinterschneidung zur Erläuterung einiger geometrischer Verhältnisse;
Fig. 2b einen Teilbereich einer Dichtungsvorrichtung im montierten Zustand, aber in von der Felge nach Fig. 2a getrennter Darstellung;
Fig. 3 einen Ausschnitt ähnlich Fig. 2b der Dichtungsvorrichtung, im unmontierten Zustand;
Fig. 4 in getrennter Darstellung des unmontierten Zustands eine Dichtungsvorrichtung und eine Felge, jeweils nach Ausführungsformen gemäß der vorliegenden Erfindung;
Fig. 5, 6, 7 jeweils Teilansichten von Ausführungsformen der Dichtungsvorrichtung;
Fig. 8 in einer Schnittdarstellung eine Ausführungsform einer Felge mit in beidseits der Felgenmittenebene angeordneter Dichtungsvorrichtung;
Fig. 9 eine Schnittansicht einer Ausführungsform einer Felge mit geradlinigem Verbindungsbereich zwischen einem Außenbereich des Felgenbettes und des Felgenhorns mit Hohlkammerprofil;
Fig. 10 eine Schnittansicht einer Felge mit Dichtungsvorrichtung nach einer Ausführungsform gemäß der vorliegenden Erfindung;
Fig. 11 ein Diagramm zur Erläuterung der Flächenpressung zwischen der Dichtungsvorrichtung und den Dichtflächen der Hinterschneidung;
Fig. 12 eine Teilschnittansicht einer modifizierten Ausführungsform einer Felge mit Dichtungsvorrichtung und stetigem Verbindungsbereich nach der vorliegenden Erfindung;
Fig. 13 eine Darstellung ähnlich Fig. 12 mit einer Felge mit Dichtungsvorrichtung nach einer modifizierten Ausführungsform;
Fig. 14 eine Teilschnittansicht einer Felge mit Hohlkammerprofil im Verbindungsbereich zwischen Felgenhorn und Felgenbett und Dichtungsvorrichtung;
Fig. 15 eine Ansicht ähnlich Fig. 13 einer Ausführungsform einer Felge mit Dichtungsvorrichtung nach der vorliegenden Erfindung;
Fig. 16, 17 Teilschnittansichten von Ausführungsformen einer Felge mit Dichtungsvorrichtung;
Fig. 18 eine Schnittansicht einer weiteren Ausführungsform einer Dichtungsvorrichtung;
Fig. 19 eine Schnittansicht einer weiteren Ausführungsform einer Dichtungsvorrichtung;
Fig. 20 eine Schnittansicht einer weiteren Ausführungsform einer Dichtungsvorrichtung;
Fig. 21 eine Schnittansicht einer weiteren Ausführungsform einer Dichtungsvorrichtung;
Fig. 22 eine Schnittansicht einer weiteren Ausführungsform einer Felge;
Fig. 23, 24 Schnittansichten zur Erläuterung der Abfolge bei der Montage der Dichtungsvorrichtung an der Felge; und
Fig. 25 eine Schnittdarstellung der Felge mit fertig montierter Dichtungsvorrichtung.

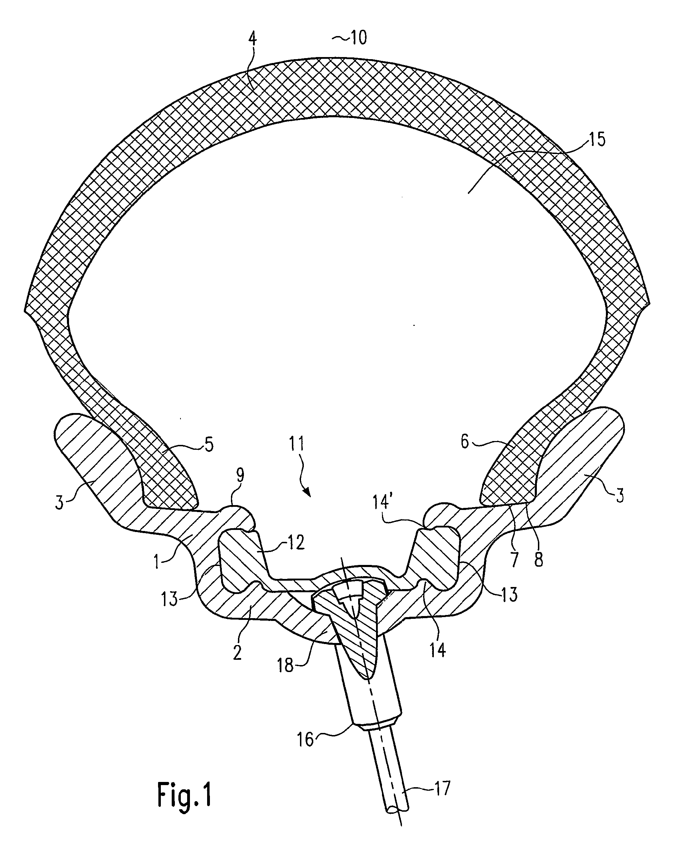

Fig. 1 der Zeichnung zeigt in einer Schnittansicht eine Felge mit Dichtungsvorrichtung und montiertem Reifen nach einer Ausführungsform gemäß der vorliegenden Erfindung.

Die Felge 1 weist ein Felgenbett 2 und ein Felgenhorn 3 auf. Ein Reifen 4 liegt mit seinem Reifenwulst 5, 6 einerseits am Felgenhorn 3 an und mit seinem, dem jeweiligen Endbereich des Reifenwulstes 5, 6 zugeordneten Bereich 7, an einer Felgenschulter 8 auf.

Die Felgenschulter 8 erstreckt sich dabei vom Felgenhorn jeweils in Richtung nach innen gerichtet bis zu einem jeweiligen Hump 9, der ein Abspringen des Reifenwulstes 5, 6 in den Bereich des Felgenbettes 2 verhindert.

Mit dem Bezugszeichen 10 ist eine Felgenmittenebene bezeichnet, die die Felge 1 in zwei weitgehend spiegelsymmetrische Felgenhälften aufteilt.

Im Bereich des Felgenbettes 2 ist eine sich aus der Ebene der Felgenschulter in Richtung nach unten gerichtet erstreckende Vertiefung 11 vorgesehen, die der Aufnahme einer Dichtungsvorrichtung 12 dient.

Wie es ohne weiteres anhand der Zeichnung ersichtlich ist, weist die Felge 1 im Bereich der Vertiefung 11 beidseits der Felgenmittenebene 10 eine Hinterschneidung 13 auf, die sich bei der in Fig. 1 der Zeichnung dargestellten Ausführungsform der Felge 1 vom Bereich des Hump 9 bis in den Bereich des Felgenbettes 2 erstreckt.

Die Dichtungsvorrichtung 12 ist dabei weitgehend form- und filächenkomplementär zur Hinterschneidung 13 ausgebildet und befindet sich in der Hinterschneidung 13 aufgenommen. Die Dichtungsvorrichtung 12, die beispielsweise aus einem Elastomer, wie beispielsweise Weichgummi, geschlossen porigen Zellstoffen oder dergleichen gefertigt sein kann, schmiegt sich vollständig in den Bereich der beidseits der Felgenmittenebene vorgesehenen Hinterschneidung 13 ein und ist zu diesem Zweck komplementär zur Form und den einzelnen Flächen der die Hinterschneidung 13 ausbildenden Flächen der Felge 1 ausgebildet.

Obwohl die Dichtungsvorrichtung 12 sich so in den Bereich der beidseitigen Hinterschneidung 13 einschmiegt, kann sie in einem von der Aufnahme in der Hinterschneidung 13 getrennten Zustand Größenabmessungen aufweisen, die dazu führen, dass zwischen der Dichtungsvorrichtung 12 und den die Hinterschneidung 13 ausbildenden Flächen bei der Anordnung der Dichtungsvorrichtung in der Hinterschneidung 13 Druckkräfte entstehen, die zu einem flächigen Anliegen der Dichtungsvorrichtung 12 in dem gesamten oder überwiegend gesamten Bereich der Hinterschneidung 13 führen.

Die Hinterschneidung 13 weist sowohl an ihrem dem Felgenbett 2 zugewandten Endbereich als auch an ihrem dem Hump 9 zugewandten Endbereich jeweils eine Einschnürung 14, 14' auf, die dazu führt, dass im Bereich der Einschnürung 14, 14' lokal höhere Flächenpressungen zwischen der Dichtungsvorrichtung 12 und der Einschnürung 14, 14' der Hinterschneidung 13 entstehen und somit der Innenraum 15 zwischen der Felge 1, der Dichtungsvorrichtung 12 und dem Schlauchlosreifen 4 hermetisch abgedichtet ist.

Wie es ohne weiteres anhand Fig. 1 der Zeichnung ersichtlich ist, überspannt die Dichtungsvorrichtung 12 den gesamten Bereich des Felgenbettes von der in der Zeichnungsebene rechten Hinterschneidung 13, über das Felgenbett 2 bis in den Bereich der in der Zeichnungsebene linken Hinterschneidung 13 und dabei insbesondere einen Speichennippel 16 einer Speiche 17.

Der Speichennippel 16 durchsetzt eine als Punze bezeichnete Öffnung 18 im Felgenbett 2 der Felge 1. Durch diese Öffnung 18 kann aber kein Innendruck aus dem Innenraum 15 entweichen, da die Dichtungsvorrichtung 12 das Felgenbett 2 vollständig überspannt.

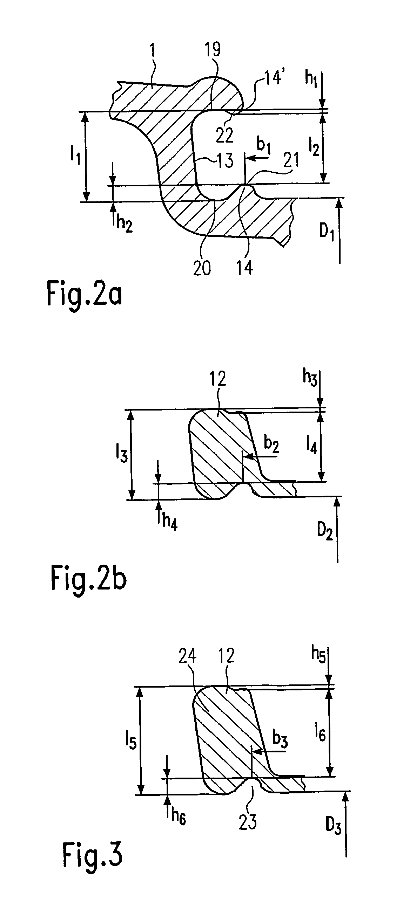

Fig. 2a zeigt einen Ausschnitt der Felge 1 aus dem Bereich der linksseitigen Hinterschneidung 13 der Felge nach Fig. 1 während Fig. 2b einen Ausschnitt der im Bereich dieser Hinterschneidung aufgenommenen Dichtungsvorrichtung 12 zeigt, die dem montierten Zustand der Dichtungsvorrichtung 12 entspricht, in aber einer von der Felge 1 getrennten Darstellung.

Mit der Abmessung I₁ wird die lichte Höhe der Hinterschneidung 13 von dem oberen Endbereich 19 bis zum unteren Endbereich 20 bezeichnet. Mit I₂ wird die lichte Höhe zwischen der oberen Endfläche 21 der unteren Einschnürung 14 und der unteren Endfläche 22 der oberen Einschnürung 14' bezeichnet. Für die Felge 1 gilt dabei I₁ > I₂.

Mit h₁ wird die Höhe der oberen Einschnürung 14' bezeichnet zwischen dem oberen Endbereich 19 und der unteren Endfläche 22. Mit h₂ wird die Höhe der unteren Einschnürung 14 bezeichnet zwischen dem unteren Endbereich 20 und der oberen Endfläche 21. Sowohl h₁ als auch h₂ sind bei der dargestellten Ausführungsform jeweils größer 0. Mit D₁ wird der Durchmesser der Felge zwischen den radial einander gegenüberliegenden unteren Endbereichen 20 bezeichnet und mit b₁ wird die lichte Querschnittsbreite der beiden einander gegenüberliegenden Einschnürrungen 14 der Felge 1 bezeichnet.

Nachfolgend wird nun auf Fig. 2b Bezug genommen. Mit I₃ wird die lichte Höhe der Dichtungsvorrichtung 12 im montierten Zustand bezeichnet, die dann, wenn die Dichtungsvorrichtung 12 in der Hinterschneidung 13 aufgenommen ist, der lichten Höhe I₁ entspricht. Ähnliches gilt für die lichte Höhe I₄, die im montierten Zustand der lichten Höhe I₂ entspricht und die lichte Höhe h₃, die im montierten Zustand der lichten Höhe h₁ entspricht, sowie die lichte Höhe h₄, die im montierten Zustand der lichten Höhe h₂ entspricht. Wenn die Dichtungsvorrichtung 12 an der Felge 1 angeordnet ist, entspricht der Durchmesser D₂ dem Durchmesser D₁. Ebenfalls gilt, dass im montierten Zustand der Dichtungsvorrichtung 12 die lichte Breite b₂ der lichten Breite b₁ entspricht.

Nachfolgend wird nun auf Fig. 3 der Zeichnung Bezug genommen, die in einer Querschnittsdarstellung einen Ausschnitt der Dichtungsvorrichtung 12 im unmontierten Zustand zeigt. In diesem unmontierten Zustand ist die lichte Höhe I₅ größer als die lichte Höhe I₁ der Hinterschneidung 13 der Felge 1 und ebenfalls ist die lichte Höhe I₆ der Dichtungsvorrichtung 12 größer als die lichte Höhe I₂ der Hinterschneidung 13.

Mit diesen beiden Bedingungen wird erreicht, dass die Dichtungsvorrichtung 12 in die Hinterschneidung 13 mit Vorspannung eingebracht wird und ein Herausrutschen der Dichtungsvorrichtung aus der Hinterschneidung 13 in jedem Betriebszustand vermieden wird. Dadurch, dass im unmontierten Zustand der Dichtungsvorrichtung 12 die lichte Höhe h₅ kleiner ist als die lichte Höhe h₁ der Felge 1 wird ebenfalls dafür Sorge getragen, dass die Dichtungsvorrichtung 12 bei der Anordnung in der Hinterschneidung mit Anpresskraft beaufschlagt wird und ähnliches gilt aufgrund der Beziehung, dass die lichte Höhe h₆ der Dichtungsvorrichtung 12 kleiner ist als die lichte Höhe h₂ der Felge 1.

Im unmontierten Zustand der Dichtungsvorrichtung 12 ist die Querschnittsbreite b₃ von dem der Einschnürung 14 der Hinterschneidung 13 zugewandten Bereich 23 der Dichtungsvorrichtung 12 größer als die entsprechende Querschnittsbreite b₁ der Felge 1. Da nämlich der Durchmesser D₃ der Dichtungsvorrichtung 12 im unmontierten Zustand kleiner ist als der entsprechende Durchmesser D₁ der Felge 1, wird die Dichtungsvorrichtung 12 bei der Anordnung an der Felge 1 radial gedehnt, sodass aufgrund der Erfüllung der Bedingung, dass b₃ größer ist als b₁ sichergestellt ist, dass aufgrund der bei der Relativdehnung der Dichtungsvorrichtung 12 stattfindenden Formänderung der Dichtungsvorrichtung 12 der in die Hinterschneidung 13 aufzunehmende Bereich 24 der Dichtungsvorrichtung 12 nicht aus der Hinterschneidung 13 herausrutscht.

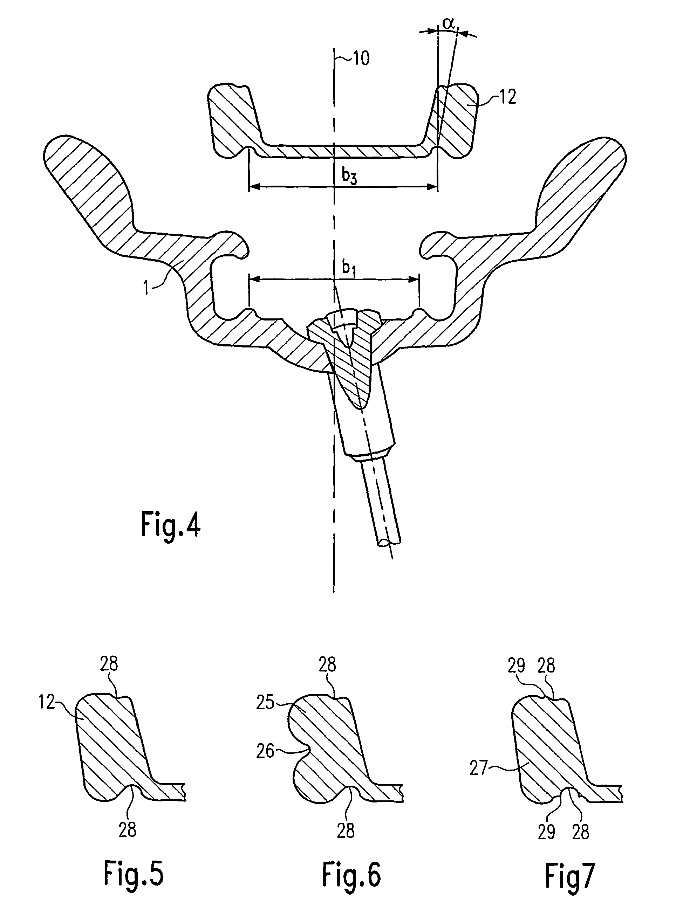

Fig. 4 der Zeichnung zeigt nun eine Darstellung der Felge 1 und der Dichtungsvorrichtung 12 in auseinandergezogener Darstellung.

Durch die Montage der Dichtungsvorrichtung 12 an der Felge 1 erfährt die Dichtungsvorrichtung 12 eine Durchmesservergrößerung, wird also unter Vorspannung in die Vertiefung 11 und damit in die beidseitig der Felgenmittenebene 10 angebrachten Hinterschneidungen 13 eingebracht. Da die Querschnittsbreite b₃ der Dichtungsvorrichtung 12 im unmontierten Zustand größer ist als die Querschnittsbreite b₁ der Felge 1, liegt die Dichtungsvorrichtung 12 trotz der bei der Durchmesservergrößerung ablaufenden Abnahme der Gesamtbreite der Dichtungsvorrichtung 12 weitgehend vollständig flächig im Bereich der Hinterschneidung 13 an.

Fig. 4 zeigt einen Winkel α, der sich ergibt als der Winkel zwischen der Felgenmittenebene 10 oder einer Parallelen dazu und einer durch die von den Einschnürungen 14, 14' bzw. der daran ausgebildeten Dichtflächen in einer Querschnittschnittsansicht aufgespannten Ebene.

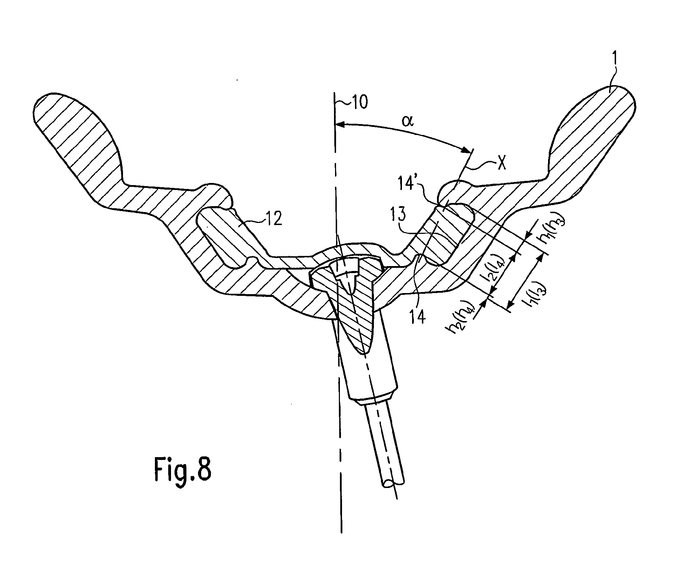

Dieser Winkel α kann Werte von etwa -20 Grad bis etwa 120 Grad einnehmen, d. h. die von den Dichtflächen aufgespannte Ebene kann in einem Bereich von einem negativen Winkel von 20 Grad zu der Felgenmittenebene 10 geneigt bis zu einem mit dieser einen Winkel von etwa 120 Grad einschließenden Bereich verlaufen. Dadurch, dass dieser Winkel α auch Werte kleiner 0 Grad einnehmen kann, also beispielsweise Werte von etwa -20 Grad bis etwa 120 Grad einnimmt, kann die in der Fig. 8 in der Zeichnungsebene rechts von der Felgenmittenebene gezeigte aufgespannte Ebene X auch in der Zeichnungsebene nach links geneigt verlaufen. Diese Konfiguration würde sich dadurch ergeben, dass durch die untere Dichtfläche 14 hindurch eine Parallele zu der Felgenmittenebene 10 gelegt wird und an dieser Parallelen die obere Dichtfläche 14' gespiegelt wird, so dass sie links von der Parallelen liegt und somit die dann von den Dichtflächen 14, 14' aufgespannte Ebene einen negativen Winkel von beispielsweise -20 Grad mit der Felgenmittenebene einschließt.

Fig. 5, 6 und 7 der Zeichnung zeigen Teilschnittansichten von unterschiedlichen Ausführungsformen der Dichtungsvorrichtung 12. Die in Fig. 5 der Zeichnung dargestellte Ausführungsform entspricht dabei der in Fig. 1 bis 4 der Zeichnung dargestellten Ausführungsform, während sich die in Fig. 6 der Zeichnung dargestellte Ausführungsform einer Dichtungsvorrichtung 25 dadurch unterscheidet, dass diese eine weitgehend quer zur Felgenmittenebene verlaufende Einschnürung 26 besitzt. Wenn nun die Dichtungsvorrichtung 25 in die Hinterschneidung 13 eingebracht werden soll, dann führt diese Einschnürung 26 dazu, dass sich die Dichtungsvorrichtung 25 leichter elastisch komprimieren lässt als die in Fig. 5 dargestellte Dichtungsvorrichtung 12. Wenn die Dichtungsvorrichtung 25 bei der Einbringung in die Hinterschneidung 13 den Bereich der Einschnürung 14 der Felge 1 passiert hat, erfährt die Dichtungsvorrichtung 25 wiederum eine elastische Streckung und die Einschnürung 26 nimmt ihre ursprüngliche Form ein.

Fig. 7 der Zeichnung zeigt eine Ausführungsform einer Dichtungsvorrichtung 27 ähnlich derjenigen nach Fig. 5, wobei aber die Dichtungsvorrichtung 27 an der der Einschnürung 14 der Hinterschneidung 13 zugewandten Einbuchtung 28 jeweils eine Dichtlippe 29 besitzt, die sich aus der Einbuchtung 28 jeweils radial in Richtung nach außen gerichtet zur Hinterschneidung bzw. der Einschnürung 14, 14' hin erstreckt und somit die dazwischen auftretende Flächenpressung lokal erhöht.

Zusätzlich zu der bei dieser Ausführungsform entstehenden lokalen Erhöhung der Flächenpressung zeichnet sich die erfindungsgemäße Felge mit der Dichtungsvorrichtung 12 dadurch aus, dass die - bezogen auf die Felge 1 - radial außenliegende Dichtfläche im Bereich der Einschnürung 14 bei zunehmender Drehwinkelgeschwindigkeit der Felge mit einer ansteigenden Anpresskraft beaufschlagt wird, was zu steigender Flächenpressung in diesem Bereich der Dichtfläche führt. Diese Ausbildung führt nun dazu, dass auch bei einem niedrigen im Innenraum 15 herrschenden Innendruck, der beispielsweise zur Erhöhung der Traktion des Schlauchlosreifens 4 auf losem Untergrund deutlich abgesenkt werden kann, ein Entweichen des Innendrucks aus dem Innenraum 15 auch bei hohen Geschwindigkeiten und damit hohen Drehwinkelgeschwindigkeiten der Felge 1 vermieden wird, da die Flächenpressung zwischen der Dichtungsvorrichtung und der Dichtfläche im Bereich der Einschnürung 14 der Hinterschneidung 13 ansteigt.

Fig. 8 der Zeichnung zeigt in einer Querschnittansicht eine modifizierte Ausführungsform einer Felge 1 mit Dichtungsvorrichtung 12. Wie es ohne weiteres anhand der Fig. 8 im Vergleich mit Fig. 4 ersichtlich ist, ist der Winkel α bei der Ausführungsform nach Fig. 8 größer als der Winkel α bei der Ausführungsform nach Fig. 4.

Durch die im Bereich der Hinterschneidung 13 einander gegenüberliegenden und im Winkel α zur Felgenmittenebene 10 geneigten Dichtflächen im Bereich der Einbuchtungen 14, 14' wird der vom nicht dargestellten Schlauchlosreifen umfasste Innenraum 15 abgedichtet. Durch die Erhöhung des Winkels α kann beispielsweise erreicht werden, dass die Felgenmaulweite zunimmt und somit Reifen mit größerer Querschnittsbreite montiert werden können. Fig. 8 zeigt auch die mit "X" bezeichnete Ebene, die von den Dichtflächen 14, 14' aufgespannt wird und im Winkel α zur Felgenmittenebene 10 verläuft. Unabhängig von dem Winkel α ist die auf die Felgenmittenebene 10 projizierte Höhe der Dichtungsvorrichtung - also die Höhe der Dichtungsvorrichtung in radialer Richtung der Felge - größer als die zugehörige Höhe der Hinterschneidung, also die auf die Felgenmittenebene 10 projizierte Höhe der Hinterschneidung. Die Dichtungsvorrichtung wird daher immer mit Vorspannung in der Hinterschneidung angeordnet.

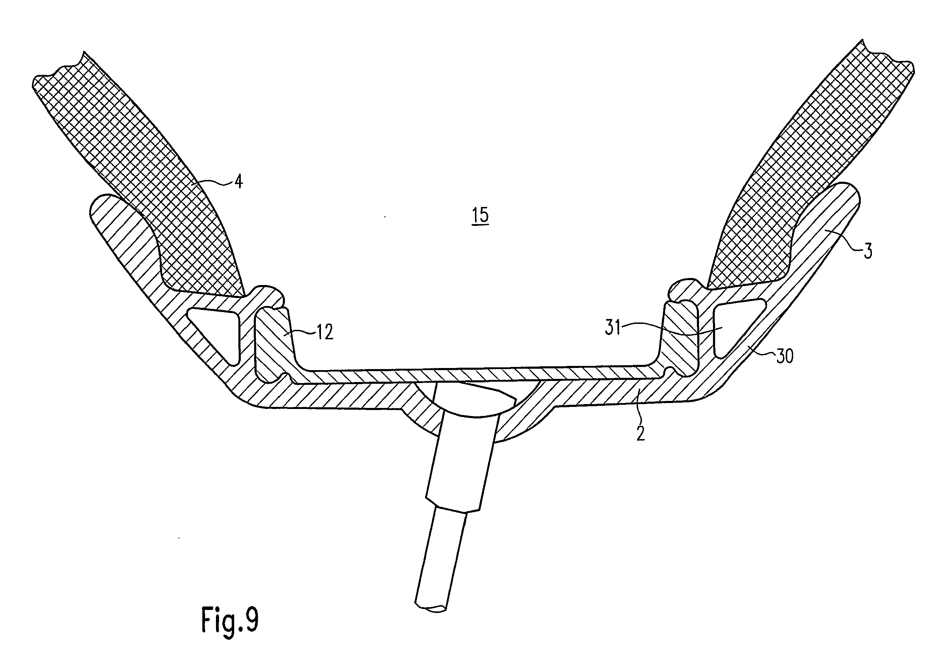

Fig. 9 der Zeichnung zeigt nun eine modifizierte Ausführungsform einer Felge nach der vorliegenden Erfindung. Wie es ohne weiteres ersichtlich ist, weist diese Felge im Verbindungsbereich zwischen dem Felgenhorn 3 und dem Felgenbett 2 einen geradlinigen Verbindungsbereich 30 auf, der aufgrund der im Felgenaußenbereich nicht vorhandenen unebenen Flächen eine einfache Reinigungsmöglichkeit der Felge bietet. Dies kann bei auf losem Untergrund eingesetzten Geländesportfahrzeugen von Vorteil sein. Um nun diesem Vorteil nicht den Nachteil eines hohen Rotationsträgheitsmoments der Felge 1 nach Fig. 1 gegenüber zu stellen, weist die in Fig. 9 dargestellte Felge in dem geradlinigen Verbindungsbereich 30 eine Hohlkammerprofilstruktur auf mit einer Hohlkammer 31. Bei dieser Ausführungsform der Felge 1 zeigen sich neben den bereits erwähnten Vorteilen der Dichtigkeit des Innenraums 15 aufgrund der Dichtungsvorrichtung 12, die das Tiefbett oder Felgenbett 2 überspannt, auch die Vorteile von hoher Steifigkeit, einfacher Herstellbarkeit der Oberflächen und der bereits angesprochenen guten Reinigungsmöglichkeit.

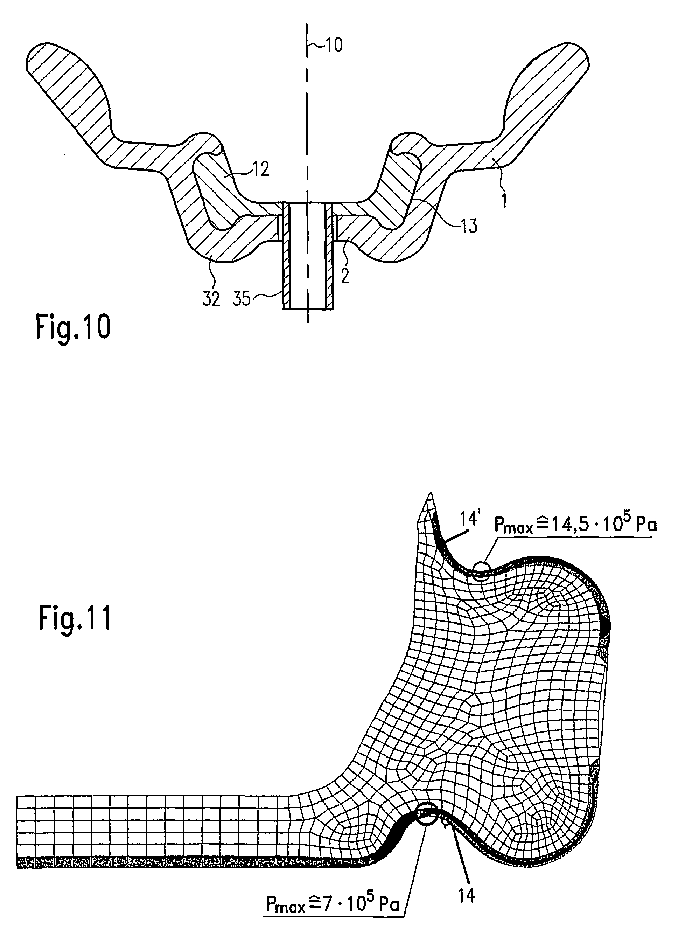

Fig. 10 der Zeichnung zeigt eine weitere modifizierte Ausführungsform einer Felge 1 nach der vorliegenden Erfindung. Diese Felge 1 unterscheidet sich von in Fig. 1 dargestellten Felge im wesentlichen dadurch, dass das Felgenbett 2 beidseits der Felgenmittenebene 10 in Richtung zur nicht dargestellten Radnabe hin eine nach radial innen verlaufende Einbuchtung 32 besitzt. Auch der Bereich der Hinterschneidung 13 bei dieser Ausführungsform der Felge weist eine gegenüber der Ausführungsform in Fig. 1 der Zeichnung geringfügig modifizierte Struktur auf, die anhand von Fig. 2 erläuterten Bedingungen I₁ > I₂, h₁ > 0 und h₂ > 0 sind aber nach wie vor erfüllt. Darüber hinaus zeigt Fig. 10 in schematisierter Darstellung auch ein an der Dichtungsvorrichtung 12 einvulkanisiertes Ventil 35. Auch an den anderen in den jeweiligen Figuren dargestellten Dichtungsvorrichtungen kann ein solches Ventil 35 zur Befüllung des Innenraums 15 vorgesehen sein.

Fig. 11 der Zeichnung zeigt nun eine graphische Darstellung der an der Dichtungsvorrichtung 12 herrschenden Druckverhältnisse, die bei einem im Innenraum 15 herrschenden Reifendruck von 1 bar und einer errechneten Maximalgeschwindigkeit eines mit der erfindungsgemäßen Felge mit Dichtungsvorrichtung und Schlauchlosreifen ausgestatteten Motorrads von etwa 250 km/h ermittelt wurden.

Wie es anhand des als Beispiel dienenden Diagramms ersichtlich ist, ergeben sich bei den geschilderten Betriebsbedingungen im Bereich der der Einschnürung 14 zugewandten Dichtfläche eine Flächenpressung von 0,7 N/mm², was einem Druckverhältnis von 7 bar (7 *10⁵ Pa) entspricht und an dem der Einschnürung 14' zugeordneten radial außenliegenden Dichtflächenbereich ein Druck von 1,45 N/mm², was einem Druckverhältnis von 14,5 bar (14,5 *10⁵ Pa) entspricht. Damit wird deutlich, dass die erfindungsgemäße Felge mit Dichtungsvorrichtung die Aufnahme eines Schlauchlosreifens auf einer Speichenfelge ermöglicht und sichere Betriebsbedingungen zur Verfügung stellt, die ein Entweichen von Innendruck aus dem Innenraum 15 vermeidet.

Bei einer modifizierten Dichtungsvorrichtung ist es auch möglich, diese so auszugestalten, dass am innenliegenden Dichtflächenbereich und am außenliegenden Dichtflächenbereich im Stillstand des Fahrzeugs weitgehend gleiche Druckverhältnisse vorliegen, so dass der dann an den Dichtflächenbereichen herrschende Druck größer als 1 bar (1 *10⁵ Pa) ist. Da sich aufgrund der Fliehkräfte bei drehendem Speichenrad an dem außenliegenden Dichtflächenbereich höhere Drücke als am innenliegenden Dichtflächenbereich einstellen, kann die Massenverteilung der Dichtungsvorrichtung nach einer weiteren Modifikation dahingehend modifiziert werden, dass auch bei sich drehendem Speichenrad am außenliegenden Dichtflächenbereich in etwa die gleichen Druckverhältnisse vorliegen wie am innenliegenden Dichtflächenbereich.

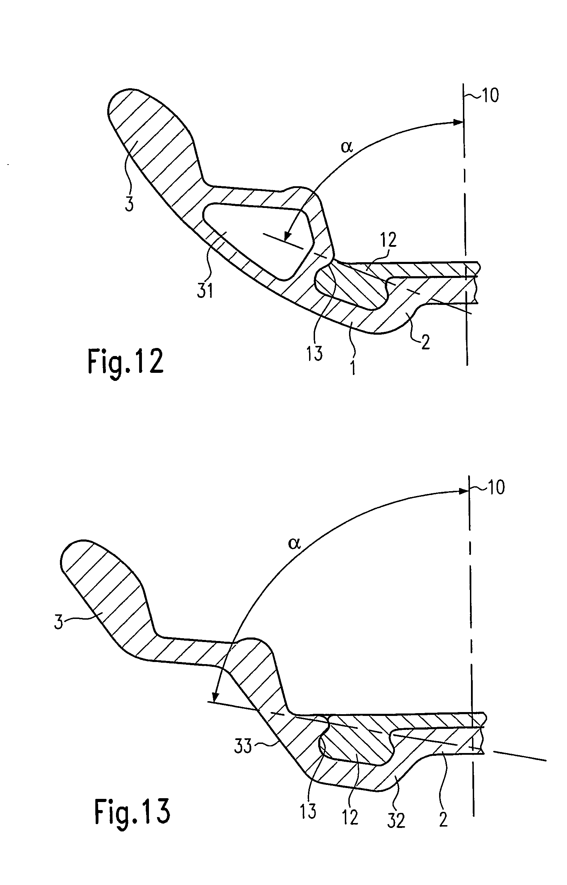

Fig. 12 zeigt eine weitere modifizierte Ausführungsform einer Felge 1 nach der vorliegenden Erfindung. Wie es ohne weiteres ersichtlich ist, weist diese Felge 1 im Winkel α zur Felgenmittenebene 10 geneigte Dichtflächen an der Hinterschneidung 13 auf und besitzt darüber hinaus eine Hohlkammer 31 im Verbindungsbereich zwischen dem Felgenbett 2 und dem Felgenhorn 3, die wiederum der Verringerung der rotatorisch bewegten Massen dient. Auch ist anhand von Fig. 12 ersichtlich, dass der Verbindungsbereich zwischen dem Felgenbett 2 und dem Felgenhorn 3 stetig gekrümmt ausgebildet ist. Der Verbindungsbereich weist also einen stetigen Verlauf auf, ohne Unstetigkeitsstellen zu besitzen.

Fig. 13 der Zeichnung zeigt eine weitere modifizierte Ausführungsform einer Felge 1 mit noch größerem Winkel α zwischen den im Bereich der Hinterschneidung 13 liegenden Dichtflächen der Felge 1 und der Felgenmittenebene 10. Diese Ausführungsform weist eine ähnlich der in Fig. 10 der Zeichnung dargestellten Ausführungsform verlaufende Einbuchtung 32 auf und besitzt einen gestuften Verbindungsbereich 33 zwischen dem Felgenbett 2 und dem Felgenhorn 3.

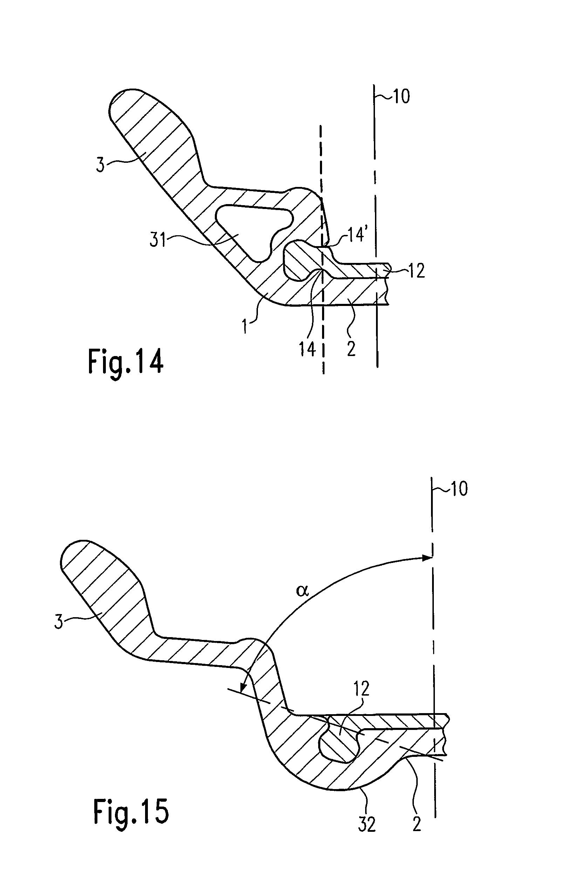

Fig. 14 der Zeichnung nun zeigt eine weitere modifizierte Ausführungsform einer Felge 1 mit Dichtungsvorrichtung 12 nach der vorliegenden Erfindung. Wie es ohne weiteres ersichtlich ist, besitzt die Felge 1 nach Fig. 14 einen geradlinigen Verbindungsbereich zwischen dem Tiefbett 2 und dem Felgenhorn 3 mit einer in diesem Bereich angebrachten Hohlkammer 31. Die im Bereich der Einschnürung 14 und 14' verlaufenden Dichtflächen spannen eine Dichtflächenebene auf, die weitgehend parallel zur Felgenmittenebene 10 verläuft, sodass bei dieser Ausführungsform der vorstehend definierte Winkel α einen Wert von etwa 0 Grad einnimmt.

Fig. 15 der Zeichnung zeigt eine modifizierte Ausführungsform einer Felge 1 mit Dichtungsvorrichtung 12 nach der vorliegenden Erfindung. Bei dieser Ausführungsform nimmt der Winkel α einen Wert von etwa 70 Grad ein und die Felge 1 besitzt eine Einbuchtung 32 ähnlich der Ausführungsform nach Fig. 10 der Zeichnung.

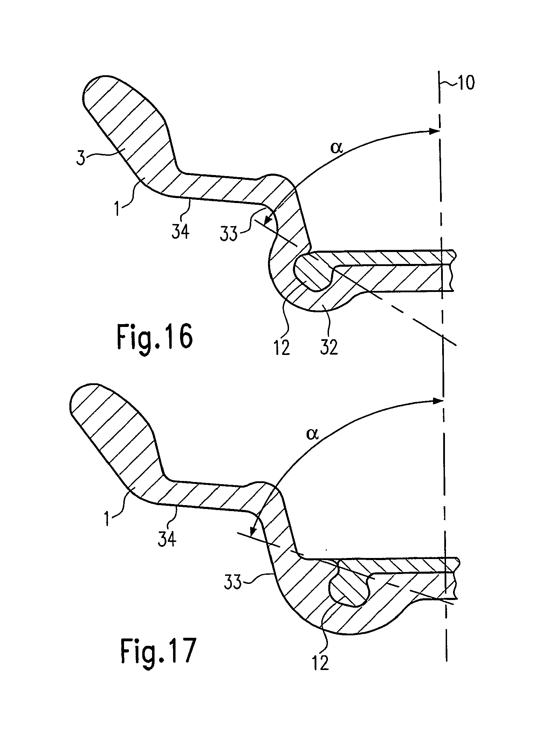

Die Fig. 16 und 17 der Zeichnung zeigen wiederum modifizierte Ausführungsformen einer Felge 1 mit Dichtungsvorrichtung 12 nach der vorliegenden Erfindung. Bei der in Fig. 16 dargestellten Ausführungsform der Felge 1 verläuft der Verbindungsbereich 33 zwischen der Einbuchtung 32 und dem Felgenhorn 3 zunächst nach innen gezogen und dann im Bereich des Verbindungsbereichs 34 geradlinig, während der Verbindungsbereich 33 bei der Felge 1 nach Fig. 17 in einem Winkel von etwa 15 Grad zur Felgenmittenebene 10 ansteigt und dann in einen Verbindungsbereich 34 übergeht, der weitgehend quer zur Felgenmittenebene 10 verläuft.

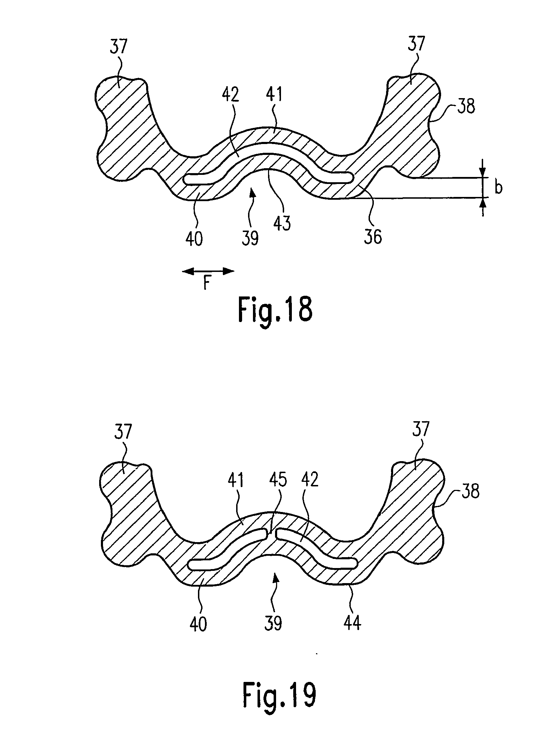

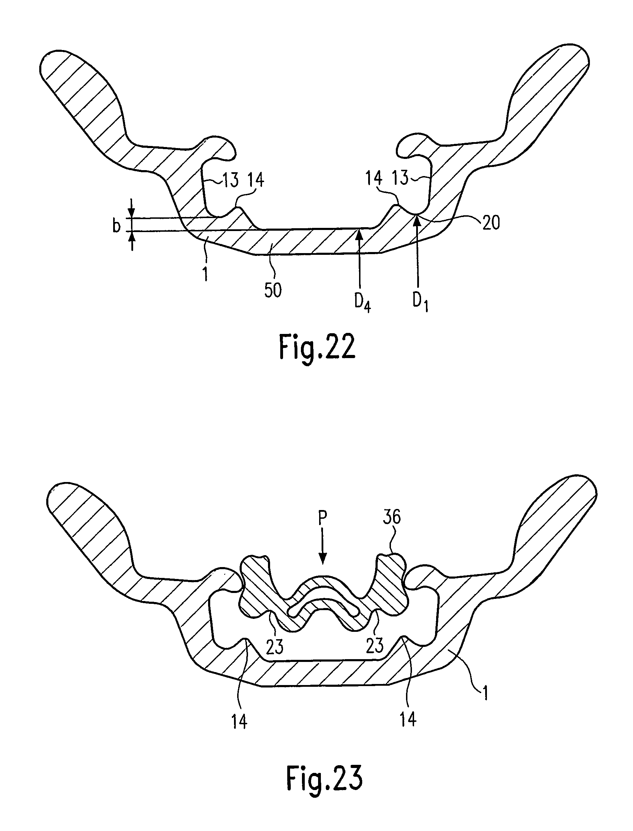

Fig. 18 der Zeichnung zeigt eine Schnittdarstellung einer weiteren Ausführungsform einer Dichtungsvorrichtung 36. Wie es ohne weiteres ersichtlich ist, weist diese Dichtungsvorrichtung 36 ähnlich der bereits vorstehend geschilderten Dichtungsvorrichtungen 12, 25 und 27 seitlich Flügel 37 auf, die zur Anordnung in den Hinterschneidungen 13 der Felge vorgesehen sind. Auch an der Dichtungsvorrichtung 36 ist an den Flügeln 37 eine Einschnürung 38 vorgesehen, die dazu dient, dass sich die Dichtungsvorrichtung 36 leichter elastisch in Richtung des Pfeils P (Fig. 23) komprimieren lässt und somit ohne großen Kraftaufwand in die Hinterschneidungen 13 der Felge 1 eingebracht werden kann.

Bei der in Fig. 18 dargestellten Ausführungsform der Dichtungsvorrichtung 36 weist ein mittlerer Bereich 39 zwischen den beiden Flügeln 37 eine von den vorstehend beschriebenen Dichtungsvorrichtungen abweichende Konfiguration auf. Wie es ohne weiteres ersichtlich ist, ist der mittlere Bereich 39 in zwei Lagen 40, 41 aufgeteilt mit einem Zwischenraum 42. Die beiden Lagen 40, 41 sorgen nun dafür, dass sich ein an der unteren Lage 40, beispielsweise aufgrund eines Speichenippels oder eines scharfkantigen Endes einer Speiche auftretende Beschädigung nicht beispielsweise in Form eines Risses bis in die obere Lage 41 fortsetzen kann. Selbst dann nämlich, wenn ein solcher Riss an der untere Lage 40 auftreten sollte, kann dieser Riss den Zwischenraum 42 zwischen den beiden Lagen 40, 41 nicht überwinden, sodass die obere Lage 41 unbeschädigt bleibt und Luft aus dem Innenraum 15 nicht entweichen kann.

Wie es darüber hinaus anhand von Fig. 18 auch ersichtlich ist, weist die Dichtungsvorrichtung 36 im mittleren Bereich 39 eine von einer geradlinigen Kontur abweichende Bogenform 43 auf, sodass die Dichtungsvorrichtung 36 für die Montage an der Felge einfach in Richtung des Doppelpfeiles F zusammengedrückt werden kann und sich in ihre vorbestimmte Stellung in der Felge 1 einfügt. Anstelle der Bogenform sind auch andere Formen möglich, die das elastisch nachgiebige Zusammendrücken der Dichtungsvorrichtung 36 in Richtung des Doppelpfeils F ermöglichen, wie beispielsweise in Form eines Teils einer Ellipse oder in der Form eines Satteldaches oder dergleichen. Diese Ausgestaltung führt auch zu einer ähnlich der im Zusammenhang mit Fig. 4 beschriebenen Wirkung, dass nämlich die in den Hinterschneidungen 13 aufgenommenen Flügel 37 nicht aus den Hinterschneidungen herausrutschen können, da die Bogenform gleichsam wie eine Feder in Richtung der Breite der Felge wirkt und die Flügel damit mit Vorspannung in die Hinterschneidungen gedrückt werden.

Fig. 19 der Zeichnung zeigt eine Schnittansicht einer weiteren Ausführungsform einer Dichtungsvorrichtung 44. Diese unterscheidet sich von der in Fig. 18 dargestellten Dichtungsvorrichtung 36 im wesentlichen dadurch, dass im mittleren Bereich 39 zwischen der unteren Lage 40 und der oberen Lage 41 ein mit beiden Lagen 40, 41 einstückiger Steg 45 vorgesehen ist, der unter Beibehaltung des Zwischenraums 42 die untere Lage 40 mit der oberen Lage 41 verbindet. Diese Ausbildung sorgt unter Beibehaltung der Vorteile der im mittleren Bereich 39 zweilagigen Ausbildung der Dichtungsvorrichtung 44 dafür, dass die beiden Lagen 40, 41 während des Herstellungsprozesses der Dichtungsvorrichtung 44 im Abstand zueinander gehalten werden und beispielsweise nicht miteinander verkleben können. Auch hat sich gezeigt, dass eine an der unteren Lage 40 möglicherweise auftretende Beschädigung der Dichtungsvorrichtung 44 aufgrund eines Speichennippels oder eines Speichenendes nicht über den Steg 45 bis zur oberen Lage 41 hindurchwandert.

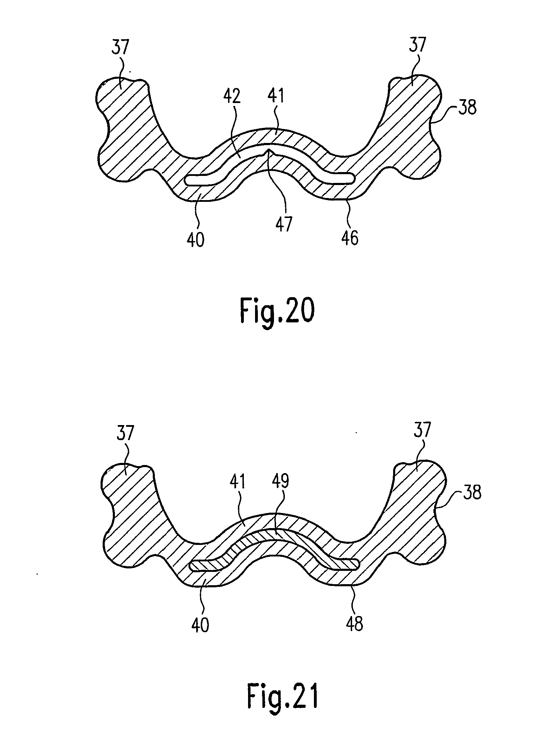

Die gleichen Vorteile ergeben sich anhand der in Fig. 20 dargestellten Dichtungsvorrichtung 46. Diese unterscheidet sich von der in Fig. 19 dargestellten Dichtungsvorrichtung 44 im wesentlichen dadurch, dass an Stelle des Steges 45 ein mit nur einer Lage, nämlich der unteren Lage 40 einstückig ausgebildeter Ansatz 47 vorgesehen ist, der unter Beibehaltung des Zwischenraums 42 dafür sorgt, dass die beiden Lagen 40, 41 nicht aufeinander haften können und darüber hinaus hat sich auch gezeigt, dass sich eine etwaige Beschädigung der unteren Lage 40 nicht als Riss über den Ansatz 47 zur oberen Lage 41 ausbreitet.

Fig. 21 der Zeichnung zeigt in einer Schnittdarstellung eine weitere Ausführungsform einer Dichtungsvorrichtung 48. Diese unterscheidet sich von den in Fig. 18 bis 20 dargestellten Dichtungsvorrichtungen dadurch, dass zwischen der unteren Lage 40 und der oberen Lage 41 eine Einlage 49 vorgesehen ist, die aus einem anderen Werkstoff gefertigt sein kann als die beispielsweise aus einem Elastomerwerkstoff gefertigte Dichtungsvorrichtung 48 und einerseits ein Aneinanderhaften der beiden Lagen 40, 41 verhindert und darüber hinaus auch dafür sorgt, dass sich eine Beschädigung der unteren Lage 40 nicht als Riss bis in die obere Lage 41 fortsetzt.

Fig. 22 der Zeichnung nun zeigt eine Schnittdarstellung einer weiteren Ausführungsform einer Felge 1 nach der vorliegenden Erfindung. Diese unterscheidet sich von der beispielsweise in Fig. 1 der Zeichnung dargestellten Felge 1 im wesentlichen dadurch, dass die in Fig. 22 gezeigte Felge 1 im Verbindungsbereich 50 zwischen den beiden Hinterschneidungen 13 einen kleineren Durchmesser D₄ besitzt als der Durchmesser D₁ der unteren Endbereiche 20 der Einschnürungen 14. Diese Durchmesserdifferenz führt zu einem Abstand "b", der die zusätzliche Bauhöhe "b" der Dichtungsvorrichtung 36, 44, 46, 48 (siehe Fig. 18 bis 21) aufgrund der Mehrlagigkeit des mittleren Bereichs 39 ausgleicht.

Schließlich zeigen die Figuren 23, 24 und 25 die Abfolge einzelner Montageschritte bei der Anordnung der Dichtungsvorrichtung 36 in der in Fig. 22 dargestellten Felge 1. Obwohl in Fig. 23, 24 und 25 nur die Dichtungsvorrichtung 36 dargestellt ist, können die weiteren Ausführungsformen der Dichtungsvorrichtung 12, 25, 27, 44, 46, 48 auf ähnliche Weise an der Felge 1 montiert werden.

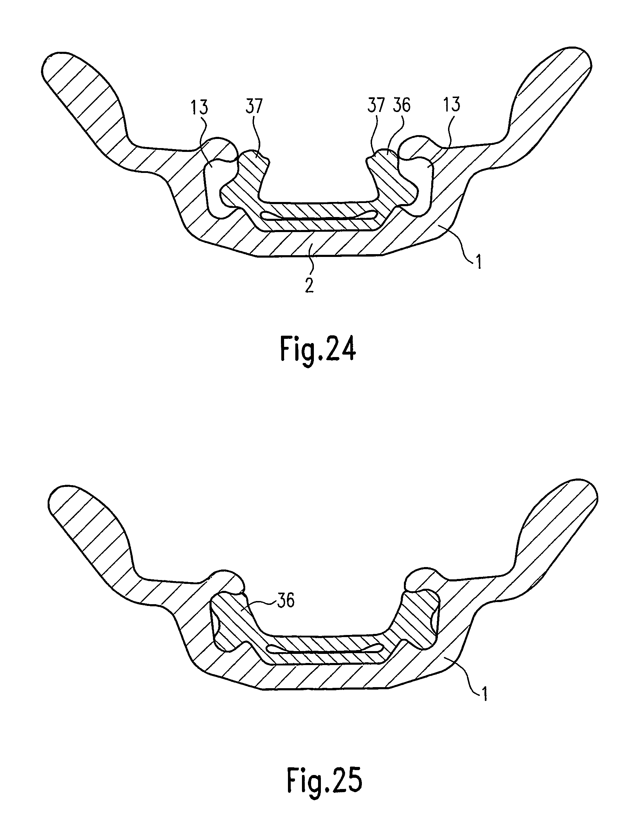

Fig. 23 zeigt einen ersten Schritt bei der Montageabfolge der Dichtungsvorrichtung 36 in der Felge 1. Die Dichtungsvorrichtung 36 wird in Richtung des Pfeils F (Fig. 18) so beaufschlagt, dass die Breite der Dichtungsvorrichtung 36 abnimmt und sie durch den von beiden Einschnürungen 14' gebildeten Zwischenraum hindurchpasst. In dieser Stellung liegt die Dichtungsvorrichtung 36 mit ihrem Bereich 23 noch nicht an der unteren Einschnürung 14 der Hinterschneidung 13 auf. Wird nun die Dichtungsvorrichtung weiter in Richtung des Pfeils P (Fig. 23) mit Kraft beaufschlagt, so nimmt sie die in Fig. 24 gezeigte Stellung ein, bei der der Bereich 23 bereits mit der Einschnürung 14 Kontakt aufgenommen hat und der mittlere Bereich 39 der Einschnürung 36 bereits am Felgenbett 2 aufliegt. Über eine weitere Kraftbeaufschlagung in Richtung des Doppelpfeiles F (Fig. 18) gleiten die beiden Flügel 37 der Dichtungsvorrichtung 36 in die jeweilige Hinterschneidung 13 hinein, sodass sich die in Fig. 25 gezeigte Endposition der montierten Dichtungsvorrichtung 36 an der Felge 1 einstellt.

Wird nun noch ein Reifen 4 an der so fertiggestellten Felge 1 aufgezogen, so ist das Rad fertig montiert.

Die Dichtungsvorrichtung und die Felge können getrennt voneinander hergestellt werden und mittels des einfachen, anhand der Fig. 23, 24 und 25 dargestellten Montagevorgangs miteinander verbunden werden, um eine fertig montierte Speichenradfelge mit Dichtungsvorrichtung für die Aufnahme eines Schlauchlosreifens zu bilden.

Die Erfindung schafft nach alledem nunmehr eine Felge mit Dichtungsvorrichtung zur Bildung eines Speichenrads mit Schlauchlosreifen. Auch schafft die Erfindung eine Felge für eine Dichtungsvorrichtung zur Bildung eines Speichenrads mit Schlauchlosreifen und eine für die oder zur Verwendung mit der erfindungsgemäßen Felge vorgesehene Dichtungsvorrichtung. Damit ermöglicht die Erfindung den Verzicht auf einen Luftschlauch bei einem Speichenrad und ermöglicht die Anbringung handelsüblicher Schlauchlosreifen an einer Speichenfelge. Durch die dargestellte Felge mit Dichtungsvorrichtung wird aufgrund der verringerten rotatorischen Massen die Manövrierbarkeit eines damit ausgestatteten Fahrzeugs, beispielsweise eines Motorrads oder eines Fahrrads, deutlich erhöht. Die Felge mit Dichtungsvorrichtung ist steifer als bekannte, beispielsweise zu Geländesportzwecken oder auch zu Straßensportzwecken oder anderen Einsatzbereichen eingesetzte Felgen. Die Montage von Schlauchlosreifen stellt einen großen Sicherheitsgewinn dar, da die Gefahr einer Reifenpanne aufgrund eines Undichtwerdens des Luftschlauchs beseitigt ist. Das bei Luftschlauchreifen oftmals beobachtete Abreißen von am Luftschlauch einvulkanisierten Ventilen entfällt vollständig, da der zugehörige Luftschlauch in Wegfall geraten ist. Die erfindungsgemäße Felge mit Dichtungsvorrichtung ermöglicht den Betrieb eines Schlauchlosreifens an einer leichten Speichenfelge mit niedrigem Innendruck, sodass die erzielbare Traktion des Schlauchlosreifens auf beispielsweise losem Untergrund deutlich erhöht werden kann. Auch bei hohen Drehwinkelgeschwindigkeiten der Felge mit Dichtungsvorrichtung und damit hohen Fahrgeschwindigkeiten eines damit beispielsweise ausgestatteten Motorrads wird ein Entweichen von Innendruck aus dem Innenraum zwischen Speiche und Dichtungsvorrichtung sowie Schlauchlosreifen sicher vermieden.

Hinsichtlich vorstehend im einzelnen nicht näher erläuterter Merkmale wird im übrigen auf die Ansprüche und die Zeichnung verwiesen.

### Bezugszeichenliste

- 1: Felge
- 2: Felgenbett
- 3: Felgenhorn
- 4: Reifen
- 5: Reifenwulst
- 6: Reifenwulst
- 7: Endbereich
- 8: Felgenschulter
- 9: Hump
- 10: Felgenmittenebene
- 11: Vertiefung
- 12: Dichtungsvorrichtung
- 13: Hinterschneidung
- 14: Einschnürung, Dichtfläche
- 14': Einschnürung, Dichtfläche
- 15: Innenraum
- 16: Speichennippel
- 17: Speiche
- 18: Punze
- 19: oberer Endbereich
- 20: unterer Endbereich
- 21: obere Endfläche
- 22: untere Endfläche
- 23: zugewandter Bereich
- 24: aufzunehmender Bereich
- 25: Dichtungsvorrichtung
- 26: Einschnürung
- 27: Dichtungsvorrichtung
- 28: Einbuchtung
- 29: Dichtlippe
- 30: Verbindungsbereich
- 31: Hohlkammer
- 32: Einbuchtung
- 33: Verbindungsbereich
- 34: Verbindungsbereich
- 35: Ventil
- 36: Dichtungsvorrichtung
- 37: Flügel
- 38: Einschnürung
- 39: mittlerer Bereich
- 40: Lage
- 41: Lage
- 42: Zwischenraum
- 43: Bogenform
- 44: Dichtungsvorrichtung
- 45: Steg
- 46: Dichtungsvorrichtung
- 47: Ansatz
- 48: Dichtungsvorrichtung
- 49: Einlage
- 50: Verbindungsbereich
- F: Doppelpfeil
- P: Pfeil

## Patentansprüche

1. Felge eines Speichenrads für Schlauchlosreifen, mit einer Dichtungsvorrichtung (12, 25, 27, 36, 44, 46, 48), die im Bereich eines Felgenbettes (2) in einer Vertiefung (11) der Felge (1) angeordnet ist und die Felge (1) beidseits einer Felgenmittenebene (10) eine Hinterschneidung (13) mit Dichtflächen aufweist, **dadurch gekennzeichnet, dass** die Hinterschneidung (13) mit zwei Einschnürungen versehen ist, die die Dichtflächen (14, 14') ausbilden und die Dichtungsvorrichtung (12, 25, 27, 36, 44, 46, 48) zur Hinterschneidung (13) weitgehend form- und flächenkomplementär ausgebildet ist und in dieser angeordnet ist.

2. Felge nach Anspruch 1, **dadurch gekennzeichnet, dass** die Hinterschneidung (13) und die Dichtungsvorrichtung (12, 25, 27, 36, 44, 46, 48) derart ausgebildet sind, dass die Flächenpressung zwischen der Dichtungsvorrichtung (12, 25, 27, 36, 44, 46, 48) und Dichtflächen (14, 14') der Felge (1) im Bereich radial außen liegender Dichtflächen (14') mit steigender Drehwinkelgeschwindigkeit der Felge zunimmt.

3. Felge nach einem der vorstehenden Ansprüche, **dadurch gekennzeichnet, dass** in einem Felgenquerschnitt eine von den Dichtflächen (14, 14') aufgespannte Ebene (X) in einem Winkel zur Felgenmittenebene (10) von etwa 0 Grad bis etwa 120 Grad verläuft.

4. Felge nach einem der vorstehenden Ansprüche, **dadurch gekennzeichnet, dass** die Hinterschneidung (13) derart ausgebildet ist, dass sie die Dichtungsvorrichtung (12, 25, 27, 36, 44, 46, 48) in von der Felgenmittenebene (10) abgewandten Bereichen weitgehend vollständig umschließt.

5. Felge nach einem der vorstehenden Ansprüche, **dadurch gekennzeichnet, dass** die Dichtungsvorrichtung (12, 25, 27, 36, 44, 46, 48) den Bereich des Felgenbettes (2) zwischen den beidseits der Felgenmittenebene (10) vorgesehenen Hinterschneidungen (13) überspannt.

6. Felge nach einem der vorstehenden Ansprüche, **dadurch gekennzeichnet, dass** die Dichtungsvorrichtung (12, 25, 27, 36, 44, 46, 48) derart ausgebildet ist, dass sich bei in der Felge angeordneter Dichtungsvorrichtung (12, 25, 27, 36, 44, 46, 48) zumindest im Bereich der Dichtflächen (14, 14') und der Dichtungsvorrichtung (12, 25, 27, 36, 44, 46, 48) eine vorbestimmte Flächenpressung einstellt.

7. Felge nach einem der vorstehenden Ansprüche, **dadurch gekennzeichnet, dass** die Dichtungsvorrichtung (12, 25, 27, 36, 44, 46, 48) in dem der Hinterschneidung (13) zugeordneten Bereich im Querschnitt eine einem Parallelogramm ähnliche Konfiguration aufweist mit im Bereich von Einschnürungen (14, 14') der Hinterschneidung (13) vorgesehenen Einbuchtungen (28).

8. Felge nach einem der vorstehenden Ansprüche, **dadurch gekennzeichnet, dass** im unmontierten Zustand der Dichtungsvorrichtung (12, 25, 27, 36, 44, 46, 48) der der Hinterschneidung (13) zuzuordnende Bereich der Dichtungsvorrichtung (12, 25, 27, 36, 44, 46, 48) in radialer Richtung der Felge (1) eine größere Höhe besitzt als die zugehörige Höhe der Hinterschneidung (13).

9. Felge nach einem der vorstehenden Ansprüche, **dadurch gekennzeichnet, dass** die Dichtungsvorrichtung (12, 25, 27, 36, 44, 46, 48) im unmontierten Zustand in radialer Richtung der Felge (1) einen kleineren Durchmesser (D₃) besitzt als der Durchmesser (D₁) der Felge (1).

10. Felge nach einem der vorstehenden Ansprüche, **dadurch gekennzeichnet, dass** die Querschnittsbreite (b₃) der Dichtungsvorrichtung (12, 25, 27, 36, 44, 46, 48) im unmontierten Zustand in dem der Einschnürung (14, 14') zuzuordnenden Bereich der Hinterschneidung (13) größer ist als die Querschnittsbreite (b₁) der Einschnürung (14, 14') der Hinterschneidung (13).

11. Felge nach einem der vorstehenden Ansprüche, **dadurch gekennzeichnet, dass** die Dichtungsvorrichtung (12, 25, 27, 36, 44, 46, 48) in dem der Einschnürung (14, 14') der Hinterschneidung (13) zuzuordnenden Bereich mit mindestens einer im Umfangsrichtung umlaufenden Dichtlippe (29) versehen ist.

12. Felge nach einem der vorstehenden Ansprüche, **dadurch gekennzeichnet, dass** die Dichtungsvorrichtung (12, 25, 27, 36, 44, 46, 48) mit mindestens einer weitgehend quer zur Felgenmittenebene (10) verlaufenden Einschnürung (26) versehen ist.

13. Felge nach einem der vorstehenden Ansprüche, **dadurch gekennzeichnet, dass** die Felge (1) im Verbindungsbereich (30) zwischen dem Felgenbett (2) und dem Felgenhorn (3) mit einer weitgehend stetig verlaufenden Außenkontur versehen ist.

14. Felge nach einem der vorstehenden Ansprüche, **dadurch gekennzeichnet, dass** die Felge (1) im Verbindungsbereich zwischen dem Felgenbett (2) und dem Felgenhorn (3) als Hohlkammerprofil ausgebildet ist.

15. Felge nach einem der vorstehenden Ansprüche, **dadurch gekennzeichnet, dass** das Felgenbett (2) im Verbindungsbereich zwischen den Hinterschneidungen (13) einen kleineren Durchmesser (D₄) besitzt als der Durchmesser (D₁) der unteren Endbereiche (20) der Einschnürungen (14).

16. Felge nach einem der vorstehenden Ansprüche, **dadurch gekennzeichnet, dass** die Dichtungsvorrichtung (12, 25, 27, 36, 44, 46, 48) mit einem einvulkanisierten Ventil (35) zur Befüllung des an der Felge (1) angebrachten Schlauchlosreifens (4) versehen ist.

17. Felge nach einem der vorstehenden Ansprüche, **dadurch gekennzeichnet, dass** die Dichtungsvorrichtung (36, 44, 46, 48) zumindest in einem Teil des das Felgenbett (2) überspannenden Bereichs mindestens zweilagig ausgebildet ist und Lagen (40, 41) mit unterschiedlicher oder gleicher Dicke vorsehbar sind.

18. Felge nach Anspruch 17, **dadurch gekennzeichnet, dass** die Lagen (40, 41) im Abstand zueinander angeordnet sind und einen Zwischenraum (42) ausbilden.

19. Felge nach Anspruch 17 oder 18, **dadurch gekennzeichnet, dass** zwischen den Lagen (40, 41) mindestens ein einstückig mit den Lagen ausgebildeter Steg (45) vorgesehen ist, der die Lagen (40, 41) unter Beibehaltung des Zwischenraumes (42) an einem Teilbereich verbindet.

20. Felge nach Anspruch 17 oder 18, **dadurch gekennzeichnet, dass** an mindestens einer Lage (40, 41) mindestens ein damit einstückig ausgebildeter und sich in Richtung zur anderen Lage erstreckender Ansatz (47) vorgesehen ist.

21. Felge nach Anspruch 18, **dadurch gekennzeichnet, dass** in dem Zwischenraum (42) eine Einlage (49) vorgesehen ist, die lose oder mit mindestens einer Lage (40, 41) verbindbar ist.

22. Felge nach einem der vorstehenden Ansprüche, **dadurch gekennzeichnet, dass** die Dichtungsvorrichtung (36, 44, 46, 48) im unmontierten Zustand im Bereich der Felgenmittenebene (10) eine von einer geradlinigen Erstreckung abweichende Kontur besitzt und insbesondere bogenförmig (43) ausgebildet ist.

23. Felge eines Speichenrads für Schlauchlosreifen, wobei die Felge (1) beidseits einer Felgenmittenebene (10) eine Hinterschneidung (13) mit Dichtflächen aufweist, für eine Dichtungsvorrichtung (12, 25, 27, 36, 44, 46, 48), die zur Anordnung im Bereich eines Felgenbettes (2) in einer Vertiefung (11) der Felge (1) vorgesehen ist, **dadurch gekennzeichnet, dass** die Hinterschneidung (13) mit zwei Einschnürungen versehen ist, die die Dichtflächen (14, 14') ausbilden.

24. Felge nach Anspruch 23, **dadurch gekennzeichnet, dass** in einem Felgenquerschnitt eine von den Dichtflächen (14, 14') aufgespannte Ebene (X) in einem Winkel zur Felgenmittenebene (10) von etwa 0 Grad bis etwa 120 Grad verläuft.

25. Felge nach Anspruch 23 oder 24, **dadurch gekennzeichnet, dass** die Hinterschneidung (13) derart ausgebildet ist, dass darin die Dichtungsvorrichtung (12, 25, 27, 36, 44, 46, 48) in von der Felgenmittenebene (10) abgewandten Bereichen weitgehend vollständig umschlossen aufnehmbar ist.

26. Felge nach einem der vorstehenden Ansprüche 23 bis 25, **dadurch gekennzeichnet, dass** die Felge (1) in radialer Richtung einen größeren Durchmesser (D₁) besitzt als die zur Anordnung an der Felge (1) vorgesehene Dichtungsvorrichtung (12, 25, 27, 36, 44, 46, 48).

27. Felge nach einem der vorstehenden Ansprüche 23 bis 26, **dadurch gekennzeichnet, dass** die Querschnittsbreite (b₁) der Einschnürung (14, 14') der Hinterschneidung (13) kleiner ist als die Querschnittsbreite (b₃) der der Einschnürung zuzuordnenden Dichtungsvorrichtung (12, 25, 27, 36, 44, 46, 48).

28. Felge nach einem der vorstehenden Ansprüche 23 bis 27, **dadurch gekennzeichnet, dass** die Felge (1) im Verbindungsbereich (30) zwischen dem Felgenbett (2) und dem Felgenhorn (3) mit einer weitgehend stetig verlaufenden Außenkontur versehen ist.

29. Felge nach einem der vorstehenden Ansprüche 23 bis 28, **dadurch gekennzeichnet, dass** die Felge (1) im Verbindungsbereich zwischen dem Felgenbett (2) und dem Felgenhorn (3) als Hohlkammerprofil ausgebildet ist.

30. Felge nach einem der vorstehenden Ansprüche 23 bis 29, **dadurch gekennzeichnet, dass** das Felgenbett (2) im Verbindungsbereich zwischen den Hinterschneidungen (13) einen kleineren Durchmesser (D₄) besitzt als der Durchmesser (D₁) der unteren Endbereiche (20) der Einschnürungen (14).

31. Dichtungsvorrichtung (12, 25, 27, 36, 44, 46, 48) für eine Felge (1) eines Speichenrads mit einem Schlauchlosreifen (4), zur Anordnung im Bereich eines Felgenbettes (2) in einer Vertiefung (11) der Felge (1), die Dichtflächen (14, 14') im Bereich beidseits einer Felgenmittenebene (10) in einer Hinterschneidung (13) aufweist und die Dichtungsvorrichtung (12, 25, 27, 36, 44, 46, 48) zu der Hinterschneidung (13) der Felge (1) weitgehend form- und flächenkomplementär ausgebildet ist, **dadurch gekennzeichnet, dass** die Dichtungsvorrichtung (12, 25, 27, 36, 44, 46, 48) in einem in die Hinterschneidung (13) einzubringenden Bereich zwei Einbuchtungen (28) aufweist, die zur Anordnung an Einschnürungen (14, 14') der Hinterschneidung (13) vorgesehen sind.

32. Dichtungsvorrichtung nach Anspruch 31, **dadurch gekennzeichnet, dass** die Dichtungsvorrichtung (12, 25, 27, 36, 44, 46, 48) derart ausgebildet ist, dass die Flächenpressung zwischen der Dichtungsvorrichtung (12, 25, 27, 36, 44, 46, 48) und Dichtflächen (14, 14') der Felge (1) im Bereich radial außen liegender Dichtflächen (14') mit steigender Drehwinkelgeschwindigkeit der Felge (1) zunimmt.

33. Dichtungsvorrichtung nach Anspruch 31 oder 32, **gekennzeichnet durch** eine Konfiguration derart, dass die von der Felgenmittenebene (10) abgewandten Bereiche weitgehend vollständig von der Hinterschneidung (13) umschließbar sind.

34. Dichtungsvorrichtung nach einem der Ansprüche 31 bis 33, **gekennzeichnet durch** eine Konfiguration derart, dass sie bei in der Felge (1) angeordneter Dichtungsvorrichtung (12, 25, 27, 36, 44, 46, 48) den Bereich des Felgenbettes (2) zwischen den beidseits der Felgenmittenebene (10) vorgesehenen Hinterschneidungen (13) überspannt.

35. Dichtungsvorrichtung nach einem der Ansprüche 31 bis 34 **dadurch gekennzeichnet, dass** die Dichtungsvorrichtung (12, 25, 27, 36, 44, 46, 48) derart ausgebildet ist, dass sich bei in der Felge (1) angeordneter Dichtungsvorrichtung (12, 25, 27, 36, 44, 46, 48) zumindest im Bereich der Dichtflächen (14, 14') und der Dichtungsvorrichtung (12, 25, 27, 36, 44, 46, 48) eine vorbestimmte Flächenpressung einstellt.

36. Dichtungsvorrichtung nach einem der Ansprüche 31 bis 35, **dadurch gekennzeichnet, dass** die Dichtungsvorrichtung (12, 25, 27, 36, 44, 46, 48) einen der Hinterschneidung (13) zuzuordnenden Bereich besitzt, der in radialer Richtung der Felge eine größere Höhe besitzt als die zugehörige Höhe der Hinterschneidung der Felge.

37. Dichtungsvorrichtung nach einem der Ansprüche 31 bis 36, **dadurch gekennzeichnet, dass** die Dichtungsvorrichtung (12, 25, 27, 36, 44, 46, 48) im unmontierten Zustand in radialer Richtung der Felge einen kleineren Durchmesser (D₃) besitzt als die Felge (1).

38. Dichtungsvorrichtung nach einem der Ansprüche 31 bis 37, **dadurch gekennzeichnet, dass** die Querschnittsbreite (b₃) der Dichtungsvorrichtung (12, 25, 27, 36, 44, 46, 48) im unmontierten Zustand in dem der Einschnürung (14, 14') zuzuordnenden Bereich der Hinterschneidung (13) größer ist als die Querschnittsbreite (b₁) der Einschnürung (14, 14') der Hinterschneidung (13).

39. Dichtungsvorrichtung nach einem der Ansprüche 31 bis 38, **dadurch gekennzeichnet, dass** die Dichtungsvorrichtung (12, 25, 27, 36, 44, 46, 48) in dem der Einschnürung (14, 14') der Hinterschneidung (13) zuzuordnenden Bereich mit mindestens einer im Umfangsrichtung umlaufenden Dichtlippe (29) versehen ist.

40. Dichtungsvorrichtung nach einem der Ansprüche 31 bis 39, **gekennzeichnet durch** mindestens eine weitgehend quer zur Felgenmittenebene verlaufende Einschnürung (26).

41. Dichtungsvorrichtung nach einem der Ansprüche 31 bis 40, **gekennzeichnet durch** ein zur Befüllung des an der Felge (1) angebrachten Schlauchlosreifens einvulkanisiertes Ventil (35).

42. Dichtungsvorrichtung nach einem der Ansprüche 31 bis 41, **dadurch gekennzeichnet, dass** die Dichtungsvorrichtung (36, 44, 46, 48) zumindest in einem Teil des zum Überspannen des Felgenbettes (2) ausgebildeten Bereichs mindestens zweilagig ausgebildet ist und Lagen (40, 41) mit unterschiedlicher oder gleicher Dicke vorsehbar sind.

43. Dichtungsvorrichtung nach Anspruch 42, **dadurch gekennzeichnet, dass** die Lagen (40, 41) im Abstand zueinander angeordnet sind und einen Zwischenraum (42) ausbilden.

44. Dichtungsvorrichtung nach Anspruch 42 oder 43, **dadurch gekennzeichnet, dass** zwischen den Lagen (40, 41) mindestens ein einstückig mit den Lagen ausgebildeter Steg (45) vorgesehen ist, der die Lagen (40, 41) unter Beibehaltung des Zwischenraumes (42) an einem Teilbereich verbindet.

45. Dichtungsvorrichtung nach Anspruch 42 oder 43, **dadurch gekennzeichnet, dass** an mindestens einer Lage (40, 41) mindestens ein damit einstückig ausgebildeter und sich in Richtung zur anderen Lage erstreckender Ansatz (47) vorgesehen ist.

46. Dichtungsvorrichtung nach Anspruch 43, **dadurch gekennzeichnet, dass** in dem Zwischenraum (42) eine Einlage (49) vorgesehen ist, die lose oder mit mindestens einer Lage (40, 41) verbindbar ist.

47. Dichtungsvorrichtung nach einem der Ansprüche 31 bis 46, **dadurch gekennzeichnet, dass** die Dichtungsvorrichtung (36, 44, 46, 48) im unmontierten Zustand im Bereich der Felgenmittenebene (10) eine von einer geradlinigen Erstreckung abweichende Kontur besitzt und insbesondere bogenförmig (43) ausgebildet ist.

## Claims

1. A rim of a spoked wheel for tubeless tyres, comprising a sealing device (12, 25, 27, 36, 44, 46, 48) which is arranged in the region of a rim bed (2) in a recess (11) of said rim (1) and said rim (1) has an undercut (13) with sealing surfaces on both sides of a rim central plane (10), **characterised in that** said undercut (13) is provided with two constrictions, which form the sealing surfaces (14, 14') and said sealing device (12, 25, 27, 36, 44, 46, 48) is configured to be substantially complementary in shape and size to said undercut (13) and is arranged therein.

2. The rim according to claim 1, **characterised in that** the undercut (13) and the sealing device (12, 25, 27, 36, 44, 46, 48) are configured in such a manner that the surface pressure between the sealing device (12, 25, 27, 36, 44, 46, 48) and the sealing surfaces (14, 14') of the rim (1) in the area of the radially outwardly lying sealing surfaces (14') increases with increasing angular velocity of rotation of the rim.

3. The rim according to any one of the preceding claims, **characterised in that** in a rim cross-section, a plane (X) spanned by the sealing surfaces (14, 14') runs at an angle to the rim central plane (10) of about 0 degrees to about 120 degrees.

4. The rim according to any one of the preceding claims, **characterised in that** the undercut (13) is configured in such a manner that it substantially completely encloses the sealing device (12, 25, 27, 36, 44, 46, 48) in the region facing away from said rim central plane (10).

5. The rim according to any one of the preceding claims, **characterised in that** the sealing device (12, 25, 27, 36, 44, 46, 48) spans the region of the rim bed (2) between the undercuts (13) provided on both sides of the rim central plane (10).

6. The rim according to any one of the preceding claims, **characterised in that** the sealing device (12, 25, 27, 36, 44, 46, 48) is configured in such a manner that when said sealing device (12, 25, 27, 36, 44, 46, 48) is disposed in the rim, a predetermined surface pressure is formed at least in the area of the sealing surfaces (14, 14') and the sealing device (12, 25, 27, 36, 44, 46, 48).

7. The rim according to any one of the preceding claims, **characterised in that** in the region associated with said undercut (13), the sealing device (12, 25, 27, 36, 44, 46, 48) has a configuration similar to a parallelogram in cross-section with depressions (28) provided in the area of constrictions (14, 14') of said undercut (13).

8. The rim according to any one of the preceding claims, **characterised in that** in the unmounted state of the sealing device (12, 25, 27, 36, 44, 46, 48), the region of the sealing device (12, 25, 27, 36, 44, 46, 48) assignable to the undercut (13) has a greater height in the radial direction of the rim (1) than the relevant height of the undercut (13).

9. The rim according to any one of the preceding claims, **characterised in that** in the unmounted state, the sealing device (12, 25, 27, 36, 44, 46, 48) has a smaller diameter (D₃) in the radial direction of the rim (1) than the diameter (D₁) of said rim (1).

10. The rim according to any one of the preceding claims, **characterised in that** the cross-sectional width (b₃) of the sealing device (12, 25, 27, 36, 44, 46, 48) in the unmounted state in the region of the undercut (13) assignable to the constriction (14, 14') is greater than the cross-sectional width (b₁) of the constriction (14, 14') of said undercut (13).

11. The rim according to any one of the preceding claims, **characterised in that** in said region assignable to said constriction (14, 14') of said undercut (13), the sealing device (12, 25, 27, 36, 44, 46, 48) is provided with at least one circumferential sealing lip (29).

12. The rim according to any one of the preceding claims, **characterised in that** the sealing device (12, 25, 27, 36, 44, 46, 48) is provided with at least one constriction (26) running substantially transversely to the rim central plane (10).

13. The rim according to any one of the preceding claims, **characterised in that** in the connecting region (30) between the rim bed (2) and the rim flange (3), said rim (1) is provided with a substantially continuous outer contour.

14. The rim according to any one of the preceding claims, **characterised in that** in said connecting region between said rim bed (2) and said rim flange (3), said rim (1) is configured as a hollow chamber profile.

15. The rim according to any one of the preceding claims, **characterised in that** in the connecting region between the undercuts (13), the rim bed (2) has a smaller diameter (D₄) than the diameter (D₁) of the lower end regions (20) of said constrictions (14).

16. The rim according to any one of the preceding claims, **characterised in that** the sealing device (12, 25, 27, 36, 44, 46, 48) is provided with a valve (35) vulcanised in place for filling the tubeless tyre (4) fitted to said rim (1).

17. The rim according to any one of the preceding claims, **characterised in that** at least in a part of the region spanning the rim bed (2), the sealing device (36, 44, 46, 48) is configured to be at least two-layered and layers (40, 41) having different or the same thickness can be provided.

18. The rim according to claim 17, **characterised in that** the layers (40, 41) are spaced at a distance from one another and form a gap (42).

19. The rim according to claim 17 or 18, **characterised in that** at least one web (45) formed integrally with the layers is provided between the layers (40, 41), said web connecting the layers (40, 41) to a partial region whilst maintaining the gap (42).

20. The rim according to claim 17 or 18, **characterised in that** at least one lug (47) configured integrally therewith and extending towards the other layer is provided on at least one layer (40, 41).

21. The rim according to claim 18, **characterised in that** an inlay (49) which is loose or which can be connected to at least one layer (40, 41) is provided in the gap (42).

22. The rim according to any one of the preceding claims, **characterised in that** in the unmounted state the sealing device (36, 44, 46, 48), in the region of the rim central plane (10), has a contour deviating from a rectilinear extension and in particular is configured to be arcuate (43).

23. A rim of a spoked wheel for tubeless tyres, wherein the rim (1) has an undercut (13) with sealing surfaces on both sides of a rim central plane (10) for a sealing device (12, 25, 27, 36, 44, 46, 48) which is provided for arrangement in the region of a rim bed (2) in a recess (11) of the rim (1), **characterised in that** said undercut (13) is provided with two constrictions, which form the sealing surfaces (14, 14').

24. The rim according to claim 23, **characterised in that** in a rim cross-section, a plane (X) spanned by the sealing surfaces (14, 14') runs at an angle to the rim central plane (10) of about 0 degrees to about 120 degrees.

25. The rim according to claim 23 or 24, **characterised in that** the undercut (13) is configured in such a manner that the sealing device (12, 25, 27, 36, 44, 46, 48) in the region facing away from said rim central plane (10) can be accommodated substantially completely enclosed therein.

26. The rim according to any one of the preceding claims 23 to 25, **characterised in that** the rim (1) has a larger diameter (D₁) in the radial direction than the sealing device (12, 25, 27, 36, 44, 46, 48) provided for mounting on the rim (1).

27. The rim according to any one of the preceding claims 23 to 26, **characterised in that** the cross-sectional width (b₁) of the constriction (14, 14') of said undercut (13) is smaller than the cross-sectional width (b₃) of the sealing device (12, 25, 27, 36, 44, 46, 48) assignable to the constriction.

28. The rim according to any one of the preceding claims 23 to 27, **characterised in that** in the connecting region (30) between the rim bed (2) and the rim flange (3), said rim (1) is provided with a substantially continuous outer contour.

29. The rim according to any one of the preceding claims 23 to 28, **characterised in that** in said connecting region between said rim bed (2) and said rim flange (3), said rim (1) is configured as a hollow chamber profile.

30. The rim according to any one of the preceding claims 23 to 29, **characterised in that** in the connecting region between the undercuts (13), the rim bed (2) has a smaller diameter (D₄) than the diameter (D₁) of the lower end regions (20) of said constrictions (14).

31. A sealing device (12, 25, 27, 36, 44, 46, 48) for a rim (1) of a spoked wheel with a tubeless tyre (4), for mounting in the region of a rim bed (2) in a recess (11) of said rim (1) which has sealing surfaces (14, 14') in the region on both sides of a rim central plane (10) in an undercut (13) and said sealing device (12, 25, 27, 36, 44, 46, 48) is configured to be substantially complementary in shape and size to said undercut (13) of said rim (1), **characterised in that** the sealing device (12, 25, 27, 36, 44, 46, 48) has two depressions (28) in a region to be inserted into the undercut (13), which depressions are provided for arrangement on constrictions (14, 14') of the undercut (13).

32. The sealing device according to claim 31, **characterised in that** the sealing device (12, 25, 27, 36, 44, 46, 48) is configured in such a manner that the surface pressure between the sealing device (12, 25, 27, 36, 44, 46, 48) and the sealing surfaces (14, 14') of the rim (1) in the area of the radially outwardly lying sealing surfaces (14') increases with increasing angular velocity of rotation of the rim (1).

33. The sealing device according to claim 31 or 32, **characterised by** a configuration in such a manner that the regions facing away from the rim central plane (10) can be substantially completely enclosed by the undercut (13).

34. The sealing device according to any one of claims 31 to 33, **characterised by** a configuration in such a manner that when the sealing device (12, 25, 27, 36, 44, 46, 48) is disposed in the rim (1), it spans the region of the rim bed (2) between the undercuts (13) provided on both sides of the rim central plane (10).

35. The sealing device according to any one of claims 31 to 34, **characterised in that** the sealing device (12, 25, 27, 36, 44, 46, 48) is configured in such a manner that when the sealing device (12, 25, 27, 36, 44, 46, 48) is disposed in the rim (1), a predetermined surface pressure is established at least in the region of the sealing surfaces (14, 14') and the sealing device (12, 25, 27, 36, 44, 46, 48).

36. The sealing device according to any one of claims 31 to 35, **characterised in that** the sealing device (12, 25, 27, 36, 44, 46, 48) has a region assignable to the undercut (13), which has a greater height in the radial direction of the rim than the relevant height of the undercut of the rim.

37. The sealing device according to any one of claims 31 to 36, **characterised in that** in the unmounted state, the sealing device (12, 25, 27, 36, 44, 46, 48) has a smaller diameter (D₃) in the radial direction of the rim than the rim (1).

38. The sealing device according to any one of claims 31 to 37, **characterised in that** the cross-sectional width (b₃) of the sealing device (12, 25, 27, 36, 44, 46, 48) in the unmounted state in the region of the undercut (13) assignable to the constriction (14, 14') is greater than the cross-sectional width (b₁) of the constriction (14, 14') of the undercut (13).

39. The sealing device according to any one of claims 31 to 38, **characterised in that** the sealing device (12, 25, 27, 36, 44, 46, 48) is provided with at least one circumferential sealing lip (29) in the region assignable to the constriction (14, 14') of the undercut (13).

40. The sealing device according to any one of claims 31 to 39, **characterised by** at least one constriction (26) running substantially transversely to the rim central plane.

41. The sealing device according to any one of claims 31 to 40, **characterised by** a valve (35) vulcanised in place for filling the tubeless tyre mounted on the rim (1).

42. The sealing device according to any one of claims 31 to 41, **characterised in that** at least in a part of the region spanning the rim bed (2), the sealing device (36, 44, 46, 48) is configured to be at least two-layered and layers (40, 41) having different or the same thickness can be provided.

43. The sealing device according to claim 42, **characterised in that** the layers (40, 41) are spaced at a distance from one another and form a gap (42)

44. The sealing device according to claim 42 or 43, **characterised in that** at least one web (45) formed integrally with the layers is provided between the layers (40, 41), said web connecting the layers (40, 41) to a partial region whilst maintaining the gap (42).

45. The sealing device according to claim 42 or 43, **characterised in that** at least one lug (47) configured integrally therewith and extending towards the other layer is provided on at least one layer (40, 41).

46. The sealing device according to claim 43, **characterised in that** an inlay (49) which is loose or which can be connected to at least one layer (40, 41) is provided in the gap (42).

47. The sealing device according to any one of claims 31 to 46, **characterised in that** in the unmounted state the sealing device (36, 44, 46, 48), in the region of the rim central plane (10), has a contour deviating from a rectilinear extension and in particular is configured to be arcuate (43).

## Revendications

1. Jante d'une roue à rayons pour pneu tubeless, comprenant un dispositif d'étanchéité (12, 25, 27, 36, 44, 46, 48), qui est disposé dans la zone d'une embase de jante (2) dans une cavité (11) de la jante (1) et la jante (1) présentant des deux côtés d'un plan médian de jante (10) une contre-dépouille (13) avec des surfaces d'étanchéité, **caractérisée en ce que** la contre-dépouille (13) est dotée de deux rétrécissements qui forment les surfaces d'étanchéité (14, 14') et le dispositif d'étanchéité (12, 25, 27, 36, 44, 46, 48) est conçu dans une large mesure complémentaire au niveau des formes et des surfaces par rapport à la contre-dépouille (13) et est disposé dans celle-ci.

2. Jante selon la revendication 1, **caractérisée en ce que** la contre-dépouille (13) et le dispositif d'étanchéité (12, 25, 27, 36, 44, 46, 48) sont conçus de telle sorte que la compression de surface entre le dispositif d'étanchéité (12, 25, 27, 36, 44, 46, 48) et les surfaces d'étanchéité (14, 14') de la jante (1) dans la zone de surfaces d'étanchéité (14') disposées radialement à l'extérieur augmente avec la vitesse croissante d'angle de rotation de la jante.

3. Jante selon l'une quelconque des revendications précédentes, **caractérisée en ce qu'**un plan (X) tendu par les surfaces d'étanchéité (14, 14') s'étend dans une section transversale de jante dans un angle d'environ 0 degré jusqu'à environ 120 degrés par rapport au plan médian de jante (10).

4. Jante selon l'une quelconque des revendications précédentes, **caractérisée en ce que** la contre-dépouille (13) est conçue de telle sorte qu'elle entoure dans une large mesure complètement le dispositif d'étanchéité (12, 25, 27, 36, 44, 46, 48) dans des zones opposées au plan médian de jante (10).

5. Jante selon l'une quelconque des revendications précédentes, **caractérisée en ce que** le dispositif d'étanchéité (12, 25, 27, 36, 44, 46, 48) recouvre la zone de l'embase de jante (2) entre les contre-dépouilles (13) prévues des deux côtés du plan médian de jante (10).

6. Jante selon l'une quelconque des revendications précédentes, **caractérisée en ce que** le dispositif d'étanchéité (12, 25, 27, 36, 44, 46, 48) est conçu de telle sorte qu'une compression de surface prédéfinie s'établit, avec le dispositif d'étanchéité (12, 25, 27, 36, 44, 46, 48) disposé dans la jante au moins dans la zone des surfaces d'étanchéité (14, 14') et du dispositif d'étanchéité (12, 25, 27, 36, 44, 46, 48).

7. Jante selon l'une quelconque des revendications précédentes, **caractérisée en ce que** le dispositif d'étanchéité (12, 25, 27, 36, 44, 46, 48) présente dans la zone attribuée à la contre-dépouille (13) en section une configuration identique à un parallélogramme avec des creux (28) prévus dans la zone de rétrécissements (14, 14') de la contre-dépouille (13).

8. Jante selon l'une quelconque des revendications précédentes, **caractérisée en ce que**, lorsque le dispositif d'étanchéité (12, 25, 27, 36, 44, 46, 48) n'est pas monté, la zone à attribuer à la contre-dépouille (13) du dispositif d'étanchéité (12, 25, 27, 36, 44, 46, 48) présente dans le sens radial de la jante (1) une hauteur supérieure à la hauteur correspondante de la contre-dépouille (13).

9. Jante selon l'une quelconque des revendications précédentes, **caractérisée en ce que** le dispositif d'étanchéité (12, 25, 27, 36, 44, 46, 48) présente, dans l'état non monté et dans le sens radial de la jante, un diamètre (D₃) plut petit que le diamètre (D₁) de la jante (1).

10. Jante selon l'une quelconque des revendications précédentes, **caractérisée en ce que** la largeur de section (b₃) du dispositif d'étanchéité (12, 25, 27, 36, 44, 46, 48) dans l'état monté dans la zone, à attribuer au rétrécissement (14, 14'), de la contre-dépouille (13) est plus grande que la largeur de section (b₁) du rétrécissement (14, 14') de la contre-dépouille (13).

11. Jante selon l'une quelconque des revendications précédentes, **caractérisée en ce que** le dispositif d'étanchéité (12, 25, 27, 36, 44, 46, 48) est doté dans la zone, à attribuer au rétrécissement (14, 14'), de la contre-dépouille (13) d'au moins une lèvre d'étanchéité (29) agencée dans le sens périphérique.

12. Jante selon l'une quelconque des revendications précédentes, **caractérisée en ce que** le dispositif d'étanchéité (12, 25, 27, 36, 44, 46, 48) est doté d'au moins un rétrécissement (26) s'étendant dans une large mesure transversalement au plan médian de jante (10).

13. Jante selon l'une quelconque des revendications précédentes, **caractérisée en ce que** la jante (1) est dotée d'un contour extérieur s'étendant de façon largement continue dans la zone de liaison (30) entre l'embase de jante (2) et le rebord de jante (3).

14. Jante selon l'une quelconque des revendications précédentes, **caractérisée en ce que** la jante (1) est conçue sous forme de profil de chambre creux dans la zone de liaison entre l'embase de jante (2) et le rebord de jante (3).

15. Jante selon l'une quelconque des revendications précédentes, **caractérisée en ce que** l'embase de jante (2) dans la zone de liaison entre les contre-dépouilles (13) présente un diamètre (D₄) plus petit que le diamètre (D₁) des zones d'extrémité (20) inférieures des rétrécissements (14).

16. Jante selon l'une quelconque des revendications précédentes, **caractérisée en ce que** le dispositif d'étanchéité (12, 25, 27, 36, 44, 46, 48) est doté d'une soupape (35) vulcanisée à l'intérieur pour le remplissage du pneu tubeless (4) placé sur la jante (1).

17. Jante selon l'une quelconque des revendications précédentes, **caractérisée en ce que** le dispositif d'étanchéité (36, 44, 46, 48) est conçu au moins à deux couches tout du moins dans une partie de la zone recouvrant l'embase de jante (2) et des couches (40, 41) avec une épaisseur différente ou identique peuvent être prévues.

18. Jante selon la revendication 17, **caractérisée en ce que** les couches (40, 41) sont disposées à distance les unes des autres et forment un espace intermédiaire (42).

19. Jante selon la revendication 17 ou 18, **caractérisée en ce qu'**au moins une nervure (45) formée d'une seule pièce avec les couches, qui relie les couches (40, 41) en conservant l'espace intermédiaire (42) sur une zone partielle, est prévue entre les couches (40, 41).

20. Jante selon la revendication 17 ou 18, **caractérisée en ce qu'**au moins un appendice (47) conçu d'une seule pièce et s'étendant en direction de l'autre couche est prévu sur au moins une couche (40, 41).

21. Jante selon la revendication 18, **caractérisée en ce qu'**une insertion (49), qui peut être reliée librement ou à au moins une couche (40, 41), est prévue dans l'espace intermédiaire (42).

22. Jante selon l'une quelconque des revendications précédentes, **caractérisée en ce que** le dispositif d'étanchéité (36, 44, 46, 48) présente dans l'état non monté, dans la zone du plan médian de jante (10), un contour différent d'un étirement rectiligne et est conçu en particulier avec une forme arquée (43).

23. Jante d'une roue à rayons d'un pneu tubeless, la jante (1) présentant des deux côtés du plan médian de jante (10) une contre-dépouille (13) avec des surfaces d'étanchéité, pour un dispositif d'étanchéité (12, 25, 27, 36, 44, 46, 48), qui est prévu pour être placée dans la zone d'une embase de jante (2) dans une cavité (11) de la jante (1), **caractérisée en ce que** la contre-dépouille (13) est dotée de deux rétrécissements qui forment les surfaces d'étanchéité (14, 14').

24. Jante selon la revendication 23, **caractérisée en ce que**, dans une section de jante, un plan (X) tendu par les surfaces d'étanchéité (14, 14') s'étend dans un angle d'environ 0 degré à environ 120 degrés par rapport au plan médian de jante (10).

25. Jante selon la revendication 23 ou 24, **caractérisée en ce que** la contre-dépouille (13) est formée de telle sorte que le dispositif d'étanchéité (12, 25, 27, 36, 44, 46, 48) peut être réceptionné à l'intérieur dans une large mesure de façon enfermée dans des zones opposées au plan médian de jante (10).

26. Jante selon l'une quelconque des revendications précédentes 23 à 25, **caractérisée en ce que** la jante (1) présente dans le sens radial un diamètre (D₁) plus grand que le dispositif d'étanchéité (12, 25, 27, 36, 44, 46, 48) prévu pour être placé sur la jante (1).

27. Jante selon l'une quelconque des revendications précédentes 23 à 26, **caractérisée en ce que** la largeur de section (b₁) du rétrécissement (14, 14') de la contre-dépouille (13) est inférieure à la largeur de section (b₃) du dispositif d'étanchéité (12, 25, 27, 36, 44, 46, 48) à attribuer au rétrécissement.

28. Jante selon l'une quelconque des revendications précédentes 23 à 27, **caractérisée en ce que** la jante (1) est dotée d'un contour extérieur s'étendant de façon largement continue dans la zone de liaison (30) entre l'embase de jante (2) et le rebord de jante (3).

29. Jante selon l'une quelconque des revendications précédentes 23 à 28, **caractérisée en ce que** la jante (1) est conçue comme profil de chambre creux dans la zone de liaison entre l'embase de jante (2) et le rebord de jante (3).

30. Jante selon l'une quelconque des revendications précédentes 23 à 29, **caractérisée en ce que** l'embase de jante (2) présente dans la zone de liaison entre les contre-dépouilles (13) un diamètre (D₄) plus petit que le diamètre (D₁) des zones d'extrémité (20) inférieures des rétrécissements (14).

31. Dispositif d'étanchéité (12, 25, 27, 36, 44, 46, 48) pour une jante (1) d'une roue à rayons comprenant un pneu tubeless (4), à disposer dans la zone d'une embase de jante (2) dans une cavité (11) de la jante (1), qui présente des surfaces d'étanchéité (14, 14') dans la zone des deux côtés d'un plan médian de jante (10) dans une contre-dépouille (13) et le dispositif d'étanchéité (12, 25, 27, 36, 44, 46, 48) étant conçu largement complémentaire au niveau des formes et des surfaces par rapport à la contre-dépouille (13) de la jante (1), **caractérisé en ce que** le dispositif d'étanchéité (12, 25, 27, 36, 44, 46, 48) présente dans une zone à introduire dans la contre-dépouille (13) deux creux (28) qui sont prévus pour l'agencement sur des rétrécissements (14, 14') de la contre-dépouille (13).

32. Dispositif d'étanchéité selon la revendication 31, **caractérisé en ce que** le dispositif d'étanchéité (12, 25, 27, 36, 44, 46, 48) est conçu de telle sorte que la compression de surface entre le dispositif d'étanchéité (12, 25, 27, 36, 44, 46, 48) et les surfaces d'étanchéité (14, 14') de la jante (1) augmente dans la zone de surfaces d'étanchéité (14') situées radialement à l'extérieur avec la vitesse d'angle de rotation croissante de la jante (1).

33. Dispositif d'étanchéité selon la revendication 31 ou 32, **caractérisé par** une configuration de telle sorte que les zones opposées au plan médian de jante (10) peuvent être entourées dans une large mesure complètement par la contre-dépouille (13).

34. Dispositif d'étanchéité selon l'une quelconque des revendications 31 à 33, **caractérisé par** une configuration de telle sorte que, lorsque le dispositif d'étanchéité (12, 25, 27, 36, 44, 46, 48) est disposé dans la jante (1), il recouvre la zone de l'embase de jante (2) entre les contre-dépouilles (13) prévues des deux côtés du plan médian de jante (10).

35. Dispositif d'étanchéité selon l'une quelconque des revendications 31 à 34, **caractérisé en ce que** le dispositif d'étanchéité (12, 25, 27, 36, 44, 46, 48) est conçu de telle sorte que, lorsque le dispositif d'étanchéité (12, 25, 27, 36, 44, 46, 48) est disposé dans la jante (1), une compression de surface prédéfinie s'établit au moins dans la zone des surfaces d'étanchéité (14, 14') et du dispositif d'étanchéité (12, 25, 27, 36, 44, 46, 48).

36. Dispositif d'étanchéité selon l'une quelconque des revendications 31 à 35, **caractérisé en ce que** le dispositif d'étanchéité (12, 25, 27, 36, 44, 46, 48) présente une zone à attribuer à la contre-dépouille (13), qui présente dans le sens radial de la jante une hauteur plus grande que la hauteur spécifique de la contre-dépouille de la jante.

37. Dispositif d'étanchéité selon l'une quelconque des revendications 31 à 36, **caractérisé en ce que** le dispositif d'étanchéité (12, 25, 27, 36, 44, 46, 48) présente, dans l'état non monté et dans le sens radial de la jante, un diamètre (D₃) plus petit que la jante (1).

38. Dispositif d'étanchéité selon l'une quelconque des revendications 31 à 37, **caractérisé en ce que** la largeur de section (b₃) du dispositif d'étanchéité (12, 25, 27, 36, 44, 46, 48) dans l'état non monté dans la zone, à attribuer au rétrécissement (14, 14'), de la contre-dépouille (13) est plus grande que la largeur de section (b₁) du rétrécissement (14, 14') de la contre-dépouille (13).

39. Dispositif d'étanchéité selon l'une quelconque des revendications 31 à 38, **caractérisé en ce que** le dispositif d'étanchéité (12, 25, 27, 36, 44, 46, 48) est doté d'au moins une lèvre d'étanchéité (29) agencée dans le sens périphérique dans la zone à attribuer au rétrécissement (14, 14') de la contre-dépouille (13).

40. Dispositif d'étanchéité selon l'une quelconque des revendications 31 à 39, **caractérisé par** au moins un rétrécissement (26) s'étendant dans une large mesure transversalement au plan médian de jante.

41. Dispositif d'étanchéité selon l'une quelconque des revendications 31 à 40, **caractérisé par** une soupape (35) vulcanisée à l'intérieur pour le remplissage du pneu tubeless placé sur la jante (1).

42. Dispositif d'étanchéité selon l'une quelconque des revendications 31 à 41, **caractérisé en ce que** le dispositif d'étanchéité (36, 44, 46, 48) est conçu avec au moins deux couches au moins dans une partie de la zone conçue pour le recouvrement de l'embase de jante (2) et des couches (40, 41) présentant une épaisseur différente ou identique sont prévisibles.

43. Dispositif d'étanchéité selon la revendication 42, **caractérisé en ce que** les couches (40, 41) sont disposées à distance l'une de l'autre et forment un espace intermédiaire (42).

44. Dispositif d'étanchéité selon la revendication 42 ou 43, **caractérisé en ce qu'**au moins une nervure (45) conçue d'un seul tenant avec les couches, qui relie les couches (40, 41) en conservant l'espace intermédiaire (42) sur une zone partielle, est prévue entre les couches (40, 41).

45. Dispositif d'étanchéité selon la revendication 42 ou 43, **caractérisé en ce qu'**au moins une embase (47) conçue d'une seule pièce et s'étendant en direction de l'autre couche est prévue sur au moins une couche (40, 41).

46. Dispositif d'étanchéité selon la revendication 43, **caractérisé en ce qu'**une insertion (49), qui peut être reliée librement ou à au moins une couche (40, 41), est prévue dans l'espace intermédiaire (42).

47. Dispositif d'étanchéité selon l'une quelconque des revendications 31 à 46, **caractérisé en ce que** le dispositif d'étanchéité (36, 44, 46, 48) présente, dans l'état non monté et dans la zone du plan médian de jante (10), un contour différent d'un étirement rectiligne et est conçu en particulier avec une forme arquée (43).
